# EUROPEAN PATENT APPLICATION

(11) **EP 3 117 994 A1**
(43) Date of publication of application: **18.01.2017**
(21) Application number: 15761139.3
(22) Date of filing: 12.03.2015
(51) Int. Cl.: B32B 27/00, B65D 1/00, B65D 65/40, B65D 75/34, B65D 81/24, B65D 83/04

(54) **MULTILAYER FILM, MOLDED FILM, AND PACKAGING BODY**

(30) Priority: 13.03.2014 JP 2014050866; 13.03.2014 JP 2014050867; 13.03.2014 JP 2014050868; 31.03.2014 JP 2014073600
(71) Applicant: Sumitomo Bakelite Co.,Ltd., Tokyo 140-0002 (JP)
(72) Inventor: KAI, Hideki, Tokyo 140-0002 (JP); MAESOWA, Shinichi, Tokyo 140-0002 (JP)
(74) Representative: Müller-Boré & Partner Patentanwälte PartG mbB
(86) International application number: PCT/JP2015/057244
(87) International publication number: WO 2015/137429

(57) **Abstract**

A multilayer film of the present invention has a plurality of unit layers laminated together, and each unit layer includes a first layer containing a crystalline resin "A" with thermoplasticity, and a second layer containing a thermoplastic resin "B" different from the crystalline resin "A". In the case where such a multilayer film is deformed in a thickness direction thereof to from a plurality of concave portions each having a size of inner diameter Φ10.0 mm x height 4.5 mm therein, a gas transmission rate of the multilayer film via the concave portions is 10.0 mg/day (40°C·90%RH) per 10 concave portions or less.

## Description

### TECHNICAL FIELD

The present invention relates to a multilayer film, a molded film and a packaging body.

### BACKGROUND ART

In packaging bodies such as packaging bags and packaging containers which are used for packaging foods, medicines or the like, at least a part of the packaging body is often composed of a multilayer film (a composite film) in order to impart various required properties thereto.

The multilayer film to be used for such packaging bodies including the packaging bags and the packaging containers requires impact resistance and a gas barrier property. That is, generally, a packaging material (the multilayer film) often requires excellent mechanical strength from the viewpoints of protecting contents and a superior property (the gas barrier property) of blocking gas such as oxygen or water vapor from the viewpoints of storing the contents for a long period of time. As a method for improving the mechanical strength and the gas barrier property, a method for stretching a multilayer film formed of a polymeric material to orient the resulting crystals of the polymeric material in the multilayer film is proposed (see, for example, Patent document 1).

However, the above mentioned method for stretching the multilayer film is very difficult to impart excellent moldability capable of forming storage portions (concave portions) for storing workpieces such as tablets by two-dimensionally molding the multilayer film to the multilayer film, in addition to the impact resistance and the gas barrier property.

### PRIOR ART DOCUMENT

### PATENT DOCUMENT

Patent document 1: JP-A 2007-283569

### SUMMARY OF THE INVENTION

### PROBLEM TO BE SOLVED BY THE INVENTION

An object of the present invention is to provide a multilayer film having both a gas barrier property and moldability without being subjected to a stretching process (a stretching treatment), a molded film and a packaging body.

### MEANS OF SOLVING THE PROBLEM

In order to achieve such an object, the present invention includes the following features (1) to (21).
(1) A multilayer film in which a plurality of unit layers are laminated together, each unit layer comprising:
   a first layer containing a crystalline resin "A" with thermoplasticity; and
   a second layer containing a thermoplastic resin "B" different from the crystalline resin "A",
   wherein in the case where the multilayer film is deformed in a thickness direction thereof to from a plurality of concave portions each having a size of inner diameter Φ10.0 mm x height 4.5 mm therein, a gas transmission rate of the multilayer film via the concave portions is 10.0 mg/day (40°C·90%RH) per 10 concave portions or less.
(2) The multilayer film according to the above feature (1), wherein the first layers and the second layers alternately and repeatedly exist along the thickness direction of the multilayer film.
(3) The multilayer film according to the above feature (1) or (2), wherein in each first layer, the crystalline resin "A" is formed into at least one type of anisotropic crystals whose molecular chain axes are oriented in an inclined direction with respect to a main surface of the multilayer film and anisotropic crystals whose molecular chain axes are oriented in a horizontal direction with respect to the main surface of the multilayer film.
(4) The multilayer film according to the above feature (3), wherein in each first layer, a degree of orientation of each anisotropic crystal of the crystalline resin "A" is 0.80 or more but less than 1.00.
(5) The multilayer film according to any one of the above features (1) to (4), wherein an average layer thickness of the first layers is in the range of 10 to 1,000 nm.
(6) The multilayer film according to any one of the above features (1) to (5), wherein a weight average molecular weight of the crystalline resin "A" is in the range of 40,000 to 200,000.
(7) The multilayer film according to any one of the above features (1) to (6), wherein an X-ray diffraction pattern derived from crystals of the crystalline resin "A" is observed on the multilayer film as at least one of a shape having point-like intensity distribution in a circumferential direction "Φ" and a shape having arc-like intensity distribution in the circumferential direction "Φ".
(8) The multilayer film according to any one of the above features (1) to (7), wherein in each second layer, the thermoplastic resin "B" has crystallinity.
(9) The multilayer film according to the above feature (8), wherein in each second layer, the thermoplastic resin "B" is formed into at least one type of anisotropic crystals whose molecular chain axes are oriented in an inclined direction with respect to a main surface of the multilayer film and anisotropic crystals whose molecular chain axes are oriented in a horizontal direction with respect to the main surface of the multilayer film.
(10) The multilayer film according to the above feature (9), wherein in each second layer, a degree of orientation of each anisotropic crystal of the thermoplastic resin "B" is 0.80 or more but less than 1.00.
(11) The multilayer film according to any one of the above features (8) to (10), wherein an X-ray diffraction pattern derived from crystals of the thermoplastic resin "B" is observed on the multilayer film as at least one of a shape having point-like intensity distribution in a circumferential direction "Φ" and a shape having arc-like intensity distribution in the circumferential direction "Φ".
(12) The multilayer film according to any one of the above features (8) to (11), wherein an average layer thickness of the second layers is in the range of 10 to 1,000 nm.
(13) The multilayer film according to any one of the above features (8) to (11), wherein in the case where an average layer thickness of the first layers is defined as "a" [nm] and an average layer thickness of the second layers is defined as "b" [nm], "a" and "b" satisfy a relationship of "a≤b".
(14) The multilayer film according to the above feature (13), wherein "a/b" is in the range of 0.10 to 1.00.
(15) The multilayer film according to the above feature (13) or (14), wherein the average layer thickness of the second layers is in the range of 50 to 2,000 nm.
(16) The multilayer film according to any one of the above features (8) to (11), wherein in the case where an average layer thickness of the first layers is defined as "a" [nm] and an average layer thickness of the second layers is defined as "b" [nm], "a" and "b" satisfy a relationship of "a>b".
(17) The multilayer film according to the above feature (16), wherein "a/b" is more than 1.00 but 9.00 or less.
(18) The multilayer film according to the above feature (16) or (17), wherein the average layer thickness of the second layers is in the range of 5 to 900 nm.
(19) The multilayer film according to any one of the above features (8) to (18), wherein a weight average molecular weight of the thermoplastic resin "B" is in the range of 100,000 to 400,000.
(20) A molded film being obtained by subjecting the multilayer film according to any one of the above features (1) to (19) to secondary molding so that the multilayer film is deformed in the thickness direction thereof to from the plurality of concave portions therein.
(21) A packaging body comprising the multilayer film according to any one of the above features (1) to (19), or the molded film according to the above feature (20).

### EFFECT OF THE INVENTION

According to the present invention, it is possible to provide a multilayer film having both a gas barrier property and moldability without being subjected to a stretching process, a molded film having an excellent gas barrier property, and a packaging body provided with such a multilayer film or molded film.

### BRIEF DESCRIPTION OF THE DRAWINGS

FIG. 1 is a perspective view showing an embodiment of a packaging body provided with a molded film (a multilayer film) according to the present invention.
FIG. 2 is an A-A line cross-sectional view of FIG. 1.
FIG. 3 is the A-A line cross-sectional view of FIG. 1.
FIG. 4 is the A-A line cross-sectional view of FIG. 1.
FIG. 5 is a TEM picture of a cross-sectional surface of a multilayer film of Example 6A (Example 6B or Example 6C).
FIG. 6(a) is an X-ray diffraction pattern derived from a crystal face (200) of a high density polyethylene resin in a multilayer film of Example 1A (Example 1B or Example 1C), and FIG. 6(b) is an X-ray diffraction pattern derived from a crystal face (200) of a high density polyethylene resin in a multilayer film of Example 2A (Example 2B or Example 2C).
FIG. 7(a) is an X-ray diffraction pattern derived from a crystal face (200) of a high density polyethylene resin in a multilayer film of Example 4A (Example 4B or Example 4C), and FIG. 7(b) is an X-ray diffraction pattern derived from a crystal face (200) of a high density polyethylene resin in a multilayer film of Example 5A (Example 5B or Example 5C).
FIG. 8(a) is an X-ray diffraction pattern derived from a crystal face (200) of a high density polyethylene resin in a multilayer film of Example 1D, and FIG. 8(b) is an X-ray diffraction pattern derived from a crystal face (200) of a high density polyethylene resin in a multilayer film of Example 3D.

### MODE FOR CARRYING OUT THE INVENTION

Hereinbelow, description will be made on a multilayer film, a molded film and a packaging body according to the present invention in detail based on preferred embodiments shown in the attached drawings.

The multilayer film of the present invention is a film in which a plurality of unit layers are laminated together. Each unit layer includes a first layer containing a crystalline resin "A" with thermoplasticity and a second layer containing a thermoplastic resin "B" different from the crystalline resin "A". Such a multilayer film can be directly used without being subjected to a molding process (secondary molding) or can be used as a molded film in which storage portions (concave portions) for storing workpieces are formed with being subjected to the molding process (the secondary molding). The present invention is characterized in that in the case where the multilayer film is deformed in a thickness direction thereof to from a plurality of concave portions each having a size of inner diameter Φ10.0 mm × height 4.5 mm therein, a gas transmission rate of the multilayer film (the molded film) via the concave portions (a gas barrier property of the multilayer film) is 10.0 mg/day (40°C·90%RH) per 10 concave portions or less.

The multilayer film having such a configuration can exhibit both a gas barrier property and moldability without being subjected to a stretching process. Therefore, the molded film (a molded body) having the storage portions which is obtained from the multilayer film and the packaging body provided such a molded film maintain an excellent gas barrier property even after being subjected to the molding process for forming the concave portions.

Hereinbelow, first, the packaging body provided with the molded film (the multilayer film) of the present invention will be described prior to describing the multilayer film and the molded film of the present invention.

### <Packaging body>

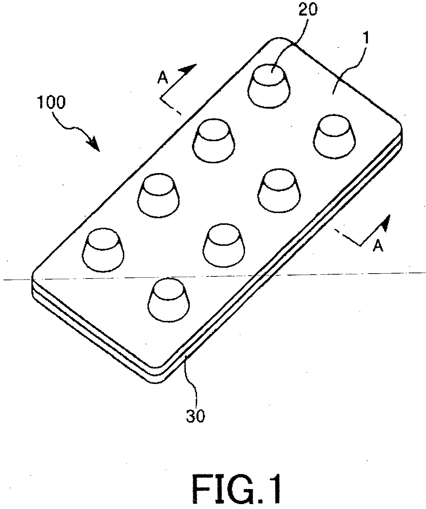

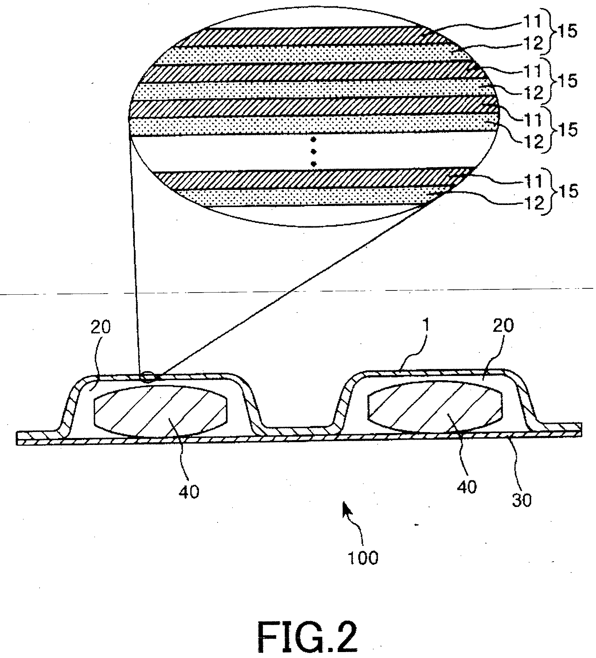

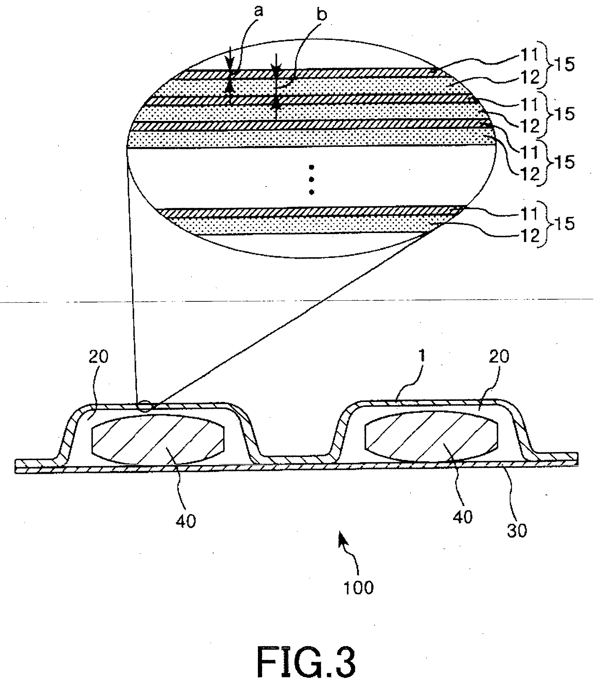

FIG. 1 is a perspective view showing an embodiment of the packaging body provided with the molded film of the present invention, and each of FIGs. 2 to 4 is an A-A line cross-sectional view of FIG. 1. In this regard, in the following description, the upper side in FIG. 1 is referred to as "upper" and the lower side therein is referred to as "lower".

A packaging body 100 is a PTP film (a packaging container) which is a blister pack. The packaging body 100 includes a molded film (a multilayer film after being subjected to secondary molding) 1 having storage portions (concave portions; pockets) 20 for storing tablets (medicines) 40 which are workpieces, and a cover film 30 attached (laminated) to the molded film 1 so as to seal openings of the storage portions 20 of the molded film 1.

The molded film 1 shown in FIGs. 1 and 2 is a film (a sheet) made of a resin and having a band-like (strip-like) profile. The storage portions 20 are formed so as to be protruded from a surface of this film opposite from the cover film 30. By protruding the film in this way, the storage portions 20 are formed as concave portions capable of storing the tablets 40 on a surface of the film facing the cover film 30. In this embodiment, 2 lines, each including 4 storage portions 20 having such configurations and arranged along a longitudinal direction of the molded film 1, are arranged along a lateral direction thereof, and thus 8 storage portions 20 are provided in the molded film 1 in total.

Further, the cover film 30 also has a band-like profile so as to correspond to that of the molded film 1, and is made of aluminium in this embodiment.

In this regard, the tablet 40 which is the medicine is stored in each storage portion 20 as the workpiece in this embodiment, but a capsule or the like may be stored in each storage portion 20 as the workpiece (the medicine). In the packaging body 100 having such a configuration, the molded film 1 is obtained by two-dimensionally forming the storage portions 20 to a multilayer film of the present invention having a band-like (strip-like) profile.

Hereinbelow, description will be made on the molded film 1, that is, the multilayer film of the present invention after being subjected to the secondary molding.

As described above, the molded film 1 is obtained by forming the storage portions 20 to the multilayer film having the band-like profile. As shown in FIG. 2, the molded film (the multilayer film) 1 is obtained by laminating a plurality of repeating portions 15 composed of laminated bodies (the unit layers) together. Each repeating portion 15 includes the first layer 11 containing the crystalline resin "A" with thermoplasticity and the second layer 12 containing the thermoplastic resin "B" different from the crystalline resin "A". Namely, by laminating the plurality of repeating portions 15 together, the molded film 1 has a configuration (a structure) in which the first layer 11 containing the crystalline resin "A" is sandwiched between 2 second layers 12 each containing the thermoplastic resin "B" different from the crystalline resin "A".

By configuring the molded film 1 in this way, growth directions of crystals (crystalline components) of the crystalline resin "A" are controlled. Specifically, a film formed of a conventional polymeric material contains a lot of spherocrystals being anisotropic crystals whose molecular chain axes are oriented in a perpendicular direction with respect to a film plane (On-edge). However, in the present invention, the crystalline resin "A" can be formed in an advantageous orientation state including at least one type of anisotropic crystals whose molecular chain axes are oriented in an inclined direction with respect to the film plane and anisotropic crystals whose molecular chain axes are oriented in a horizontal direction with respect to the film plane (In-plane). In this regard, the film plane means a main surface of the molded film (the multilayer film) 1.

In such a molded film 1, each first layer 11 contains the crystalline resin "A", and the crystalline resin "A" is formed into the at least one type of the anisotropic crystals (anisotropic crystalline components) whose molecular chain axes are oriented in the inclined direction with respect to the film plane and the anisotropic crystals whose molecular chain axes are oriented in the horizontal direction with respect to the film plane (In-plane). Therefore, since a path of water vapor (water molecules) when transmitting each first layer 11 becomes long, the molded film (the multilayer film) 1 provided with the first layers 11 each having such a configuration exhibits an excellent gas barrier property (an excellent water vapor barrier property) without being subjected to the stretching process.

Namely, in the molded film 1, each first layer 11 serves as a gas barrier layer to prevent or suppress transmission of the gas (the water vapor).

In this regard, the molecular chain axis of each crystal of the crystalline resin "A" has only to be oriented in the inclined direction and/or the horizontal direction with respect to the film plane, but is preferably oriented in the horizontal direction with respect to the film plane. In this case, since the path of the water vapor when transmitting each first layer 11 becomes longer, the molded film 1 can exhibit a more excellent gas barrier property.

Further, in the case where the molecular chain axis of each crystal is oriented in the inclined direction with respect to the film plane, a minimum angle between the molecular chain axis and the film plane is preferably in the range of 10 to 80°. If the minimum angle between the molecular chain axis and the film plane falls within the above range, it is possible to extensively distribute crystal faces of crystalline lamellas on the film plane just like a case where the molecular chain axis is vertical to the film plane. This extensive distribution of the crystal faces of the crystalline lamellas on the film plane makes it possible to improve the gas barrier property of the molded film 1.

In this regard, a tilt of the orientated crystals can be identified by, for example, reading off angles from an one-dimensional data derived from the crystalline lamellas of the crystalline resin "A", which is obtained by SAXS measurement.

Further, in each first layer 11, a degree of orientation of each anisotropic crystal of the crystalline resin "A" oriented in the inclined direction and/or the horizontal direction is preferably 0.80 or more but less than 1.00, and more preferably 0.90 or more but less than 1.00. If the degree of orientation falls within the above range, the molded film 1 exhibits a more excellent gas barrier property. In this regard, in the case where a half-value width of a diffraction peak obtained by converting an X-ray diffraction pattern derived from the crystals of the crystalline resin "A", which are contained in each first layer 11 and whose molecular chain axes are oriented in the inclined direction and/or the horizontal direction with respect to the plane of the molded film 1, into an one-dimensional format is defined as "H", the above degree of orientation (Π) can be calculated by a formula: Π = (180-H)/180.

An average layer thickness of the first layers 11 is preferably in the range of 10 to 1,000 nm, more preferably in the range of 10 to 500 nm, and even more preferably in the range of 10 to 100 nm.

By setting the average layer thickness of the first layers 11 within the above range, the crystals (polymeric crystals) form specific structures due to a size effect. This makes it possible to more precisely control the growth of the crystals (the crystalline components) of the crystalline resin "A". Therefore, the crystalline resin "A" is formed in each first layer 11 into the at least one type of the anisotropic crystals whose molecular chain axes are oriented in the inclined direction with respect to the film plane and the anisotropic crystals whose molecular chain axes are oriented in the horizontal direction with respect to the film plane. This makes it possible to improve the gas barrier property of not only each first layer 11 but also the molded film 1 without impairing characteristics of the thermoplastic resin.

In this regard, if the average layer thickness of the first layers 11 exceeds the above upper limit value, a ratio of portions where the structural control of the crystals (the crystalline components) of the crystalline resin "A" has been completed in each first layer 11 is decreased depending to the types of the crystalline resin "A", and thus there is a fear that the effect of improving the gas barrier property cannot be sufficiently obtained. Further, a case where the average layer thickness of the first layers 11 is less than the above lower limit value is also the same as above.

Here, the average layer thickness of the first layers 11 is a value obtained by dividing a sum of thicknesses of all first layers 11 included in the molded film 1 by a total number of the first layers 11 included in the molded film 1.

Further, a standard deviation of the average layer thickness of the first layers 11 is preferably 100 nm or less, and more preferably 50 nm or less.

If the standard deviation falls within the above range, each first layer 11 included in the molded film 1 can be judged to have a substantially uniform thickness. Therefore, in each first layer 11 included in the molded film 1, the at least one type of the anisotropic crystals oriented in the inclined direction and the anisotropic crystals oriented in the horizontal direction is reliably formed. For this reason, each first layer 11 exhibits an excellent gas barrier property, and the molded film 1 including the plurality of first layers 11 along a thickness direction thereof exhibits a more excellent gas barrier property.

Further, the crystalline resin "A" contained in each first layer 11 is not particularly limited as long as it is a thermoplastic resin with crystallinity. Examples thereof include: a polyolefin resin such as polyethylene, polypropylene or polymethyl pentene; an polyamide resin such as nylon 6 or nylon 66; a polyester resin such as polyethylene terephthalate, polybutylene terephthalate or polyethylene-2,6-naphthalate; a polyacetal resin; a polylactic acid resin; a polyglycolic acid resin; a polycaprolactone resin; and the like. One type of them can be used alone or two or more types of them can be used in combination.

Among them, the crystalline resin "A" is preferably the polyolefin resin, more preferably the polyethylene resin, and even more preferably a high density polyethylene resin. By using such a resin, it is possible to more reliably control the orientation of the crystals (the crystalline components) of the crystalline resin "A". Therefore, in the case where the average layer thickness of the first layers 11 is set within the above range, it is possible for the crystalline resin "A" to be formed into the at least one type of the anisotropic crystals whose molecular chain axes are oriented in the inclined direction with respect to the film plane and the anisotropic crystals whose molecular chain axes are oriented in the horizontal direction with respect to the film plane in each first layer 11.

In this regard, in the case where the polyethylene resin is used as the crystalline resin "A", a thermal melting amount (ΔH) derived from crystals (crystalline components) of the polyethylene resin, which is obtained by a differential thermal analysis, is preferably 20 J/g or more, and more preferably 30 J/g or more. If the thermal melting amount (ΔH) derived from the crystals (the crystalline components) of the polyethylene resin, which is obtained by the differential thermal analysis, is less than the above lower limit value, crystal growth of the polyethylene resin is insufficient, and thus there is a fear that the gas barrier property is lowered if the average layer thickness of the first layers 11 is small.

Further, a weight average molecular weight of the crystalline resin "A" is preferably in the range of 40,000 to 200,000, more preferably in the range of 45,000 to 150,000, and even more preferably in the range of 50,000 to 120,000. When the average layer thickness of the first layers 11 is set within the above range, that is, when each first layer 11 is defined in a thickness space having nanometer order, it is possible to crystallize the crystalline resin "A" in a state that the molecular chain axes of the crystals of the crystalline resin "A" are oriented in the inclined direction and/or in the horizontal direction with respect to the film plane without markedly blocking molecular motion of the crystalline resin "A". For this reason, it is possible to impart the excellent gas barrier property to the molded film 1.

Further, as shown in FIG. 2, by interposing each second layer 12 between the adjacent first layers 11, this second layer 12 can have a function of setting the thickness of each first layer 11 to an adequate value to thereby crystallize the crystalline resin "A" in the state that the molecular chain axes of the crystals (the crystalline components) of the crystalline resin "A" are oriented in the inclined direction and/or in the horizontal direction with respect to the film plane. Further, when the multilayer film having the plate-like profile is subjected to the molding process (the secondary molding) such that the storage portions 20 are protruded from one surface thereof to thereby obtain the molded film 1, the second layer 12 can also have a function of imparting superior moldability to the multilayer film.

Therefore, by interposing this second layer 12 between the above mentioned first layers 11, each first layer 11 not only exhibits the excellent gas barrier property in the multilayer film, but also can maintain the above inherent gas barrier property in the molded film 1 having the storage portions 20 for storing the tablets 40 which is obtained by subjecting the multilayer film to the secondary molding. Namely, the multilayer film can have both the gas barrier property and the moldability without being subjected to the stretching process (the stretching treatment). As a result, the molded film 1 obtained by subjecting such a multilayer film to the molding process for forming the storage portions 20 can also exhibit the excellent gas barrier property.

The thermoplastic resin "B" contained in each second layer 12 is not particularly limited as long as it is a thermoplastic resin different from the crystalline resin "A". Examples thereof include a polystyrene resin, a polycarbonate resin, a polyacrylate resin, an acryl resin and the like in addition to the resins each exemplified as the above mentioned crystalline resin "A" contained in each first layer 11. One type of them can be used alone or two or more types of them can be used in combination.

As described above, each second layer 12 has the function of imparting the superior moldability to the multilayer film. In order to more markedly exhibt such a function, it is preferred that the thermoplastic resin "B" contains at least one of the polypropylene resin and the ethylene-cyclic olefin resin.

Further, it is preferred that in each second layer 12, the thermoplastic resin "B" has crystallinity just like the crystalline resin "A" contained in each first layer 11. It is more preferred that crystals (crystalline components) of the thermoplastic resin "B" exist in a state that molecular chain axes thereof are oriented in an inclined direction and/or in a horizontal direction with respect to the film plane. By controlling crystal growth of the thermoplastic resin "B" in each second layer 12 in this way, it is possible to improve a gas barrier property of each second layer 12.

Further, the molecular chain axes of the crystals of the thermoplastic resin "B" have only to be oriented in the inclined direction and/or the horizontal direction with respect to the film plane, but are preferably oriented in the horizontal direction with respect to the film plane. In this case, since a path of the water vapor when transmitting each second layer 12 becomes longer, the molded film 1 can exhibit a more excellent gas barrier property.

Further, in the case where the molecular chain axis of each crystal is oriented in the inclined direction with respect to the film plane, a minimum angle between the molecular chain axis and the film plane is preferably in the range of 10 to 80°. If the minimum angle between the molecular chain axis and the film plane falls within the above range, it is possible to extensively distribute crystal faces of crystalline lamellas on the film plane just like a case where the molecular chain axis is vertical to the film plane. This extensive distribution of the crystal faces of the crystalline lamellas on the film plane makes it possible to improve the gas barrier property of the molded film 1.

Further, in each second layer 12, a degree of orientation of each anisotropic crystal of the thermoplastic resin "B" oriented in the inclined direction and/or the horizontal direction is preferably 0.80 or more but less than 1.00, and more preferably 0.90 or more but less than 1.00. If the degree of orientation falls within the above range, the molded film 1 exhibits a more excellent gas barrier property. In this regard, in the case where a half-value width of a diffraction peak obtained by converting an X-ray diffraction pattern derived from the crystals of the thermoplastic resin "B", which are contained in each second layer 12 and whose molecular chain axes are oriented in the inclined direction and/or the horizontal direction with respect to the plane of the molded film 1, into an one-dimensional format is defined as "H", the above degree of orientation (Π) can be calculated by a formula: Π = (180-H)/180.

In order to improve the gas barrier property of each second layer 12, that is, to control the crystal growth in each second layer 12, an average layer thickness of the second layers 12 is preferably in the range of 10 to 1,000 nm, more preferably in the range of 10 to 500 nm, and even more preferably in the range of 10 to 100 nm. If the average layer thickness of the second layers 12 exceeds the above upper limit value, a ratio of portions where the structural control of the crystals (the crystalline components) of the thermoplastic resin "B" has been completed in each second layer 12 is decreased, and thus there is a fear that the effect of improving the gas barrier property cannot be sufficiently obtained. Further, a case where the average layer thickness of the second layers 12 is less than the above lower limit value is also the same as above. Furthermore, there is a fear that the moldability of the molded film (the multilayer film) 1 is also lowered.

In this regard, in the case where the average layer thickness of the second layers 12 is set within the above range, it is preferred that the thermoplastic resin "B" contains the at least one of the polypropylene resin and the ethylene-cyclic olefin resin. This makes it possible to more reliably control the crystal growth in each second layer 12.

Here, just like in the case of the first layers 11, the average layer thickness of the second layers 12 is a value obtained by dividing a sum of thicknesses of all second layers 12 included in the molded film 1 by a total number of the second layers 12 included in the molded film 1.

Further, a standard deviation of the average layer thickness of the second layers 12 is preferably 100 nm or less, and more preferably 50 nm or less.

If the standard deviation falls within the above range, each second layer 12 included in the molded film 1 can be judged to have a substantially uniform thickness. Therefore, in each second layer 12 included in the molded film 1, the at least one type of the anisotropic crystals oriented in the inclined direction and the anisotropic crystals oriented in the horizontal direction is reliably formed. For this reason, each second layer 12 exhibits an excellent gas barrier property, and the molded film 1 including the plurality of second layers 12 along a thickness direction thereof exhibits a more excellent gas barrier property.

Further, a weight average molecular weight of the thermoplastic resin "B" is preferably in the range of 10,000 to 400,000, more preferably in the range of 150,000 to 370,000, and even more preferably in the range of 200,000 to 350,000. By setting the weight average molecular weight of the thermoplastic resin "B" within the above range, it is possible to complete the orientation and the crystallization of the thermoplastic resin "B" in each second layer 12 without impairing a film property and the moldability of the molded film (the multilayer film) 1.

In this regard, when the weight average molecular weight of the crystalline resin "A" falls within the above preferable range, it is preferred that the weight average molecular weight of the thermoplastic resin "B" also falls within the above preferable range. This makes it possible to more markedly exhibit the above effects.

Further, in each of the above mentioned first layers 11 and second layers 12, each of the crystalline resin "A" and the thermoplastic resin "B" is preferably formed into the anisotropic crystals whose molecular chain axes are oriented in the inclined direction and/or the horizontal direction with respect to the film plane, and is more preferably formed into the anisotropic crystals whose molecular chain axes are oriented in the horizontal direction with respect to the film plane. In this case, the crystal faces of the crystalline lamellas extensively distribute on the film plane. Therefore, it is possible to obtain a molded film 1 having a further excellent gas barrier property.

Each of the crystalline resin "A" and the thermoplastic resin "B" respectively contained in each first layer 11 and each second layer 12 may be a homopolymer obtained by polymerizing one type of monomers, a co-polymer obtained by polymerizing two or more types of monomers, or a blended resin containing two or more types of the homo-polymers and/or the co-polymers. Further, each first layer 11 or each second layer 12 may contain various types of additive agents in addition to the crystalline resin "A" or the thermoplastic resin "B". Concrete examples of the additive agents include an anti-oxidizing agent, an anti-static agent, a crystal nucleating agent, inorganic particles, organic particles, a viscosity reducing agent, a thickening agent, a heat stabilizing agent, a lubricant agent, an infrared absorbing agent, an ultraviolet absorbing agent, and the like.

As described above, in the present invention, the crystalline resin "A" contained in each first layer 11 is different from the thermoplastic resin "B" contained in each second layer 12. Here, in this specification, "the thermoplastic resin "B" different from the crystalline resin "A"" means a resin having a chemical structure different from a chemical structure of the crystalline resin "A".

Typically, in the case where repeating structures derived from the monomers which are contained in the chemical structure of the crystalline resin "A" are different from repeating structures derived from the monomers which are contained in the chemical structure of the thermoplastic resin "B", the thermoplastic resin "B" is a resin "different from the crystalline resin "A"". Further, even in the case where the repeating structures of the crystalline resin "A" are the same as the repeating structures of the thermoplastic resin "B", if a weight ratio of such repeating structures contained in the chemical structure of the crystalline resin "A" or a type of a structure other than the repeating structures contained therein is different from that of the thermoplastic resin "B", the thermoplastic resin "B" is also a resin "different from the crystalline resin "A"".

Furthermore, in the case where each of the crystalline resin "A" and the thermoplastic resin "B" is a blended resin containing two or more types of resins (the homo-polymers and/or the co-polymers), if the types of the resins constituting the blended resin of the crystalline resin "A" are the same as, but a blended ratio thereof is different from that of the thermoplastic resin "B", the thermoplastic resin "B" is regarded as a resin having a chemical structure different from the chemical structure of the crystalline resin "A", and thus is also a resin "different from the crystalline resin "A"".

Further, a combination of the crystalline resin "A" and the thermoplastic resin "B" different from the crystalline resin "A" is not particularly limited, but is preferably a combination of the polyolefin resin and the at least one of the polypropylene resin and the ethylene-cyclic olefin resin, more preferably a combination of the polyethylene resin and the at least one of the polypropylene resin and the ethylene-cyclic olefin resin, and even more preferably the high density polyethylene resin and the at least one of the polypropylene resin and the ethylene-cyclic olefin resin.

By selecting such a combination, the above mentioned effects are more markedly exhibited. Therefore, it is possible to further exactly control the crystal growth and the orientation to thereby obtain a molded film 1 having a more excellent gas barrier property and more superior moldability. In particular, by selecting the combination of the high density polyethylene resin and the polypropylene resin, they make contact with each other at a boundary face between the first layer 11 and the second layer 12. This contact makes it possible to accelerate the crystal formation. Further, since both the crystals are formed at the boundary face between the first layer 11 and the second layer 12 in this way, the resulting molded film 1 exhibits excellent adhesiveness therebetween at the boundary face.

Further, a weight ratio of the first layers 11 with respect to the whole molded film (the whole multilayer film) 1 is not particularly limited, but is preferably in the range of 10 to 90 wt%, and more preferably in the range of 20 to 80 wt%. In other words, in the case where the thickness of the molded film 1 is defined as "A" [nm], and the sum of the thicknesses of all first layers 11 included in the molded film 1 is "B" [nm], "B/A" is preferably in the range of 0.1 to 0.9, and more preferably in the range of 0.2 to 0.8.

By setting the weight ratio of the first layers 11 with respect to the whole molded film 1 within the above range, it becomes possible to reliably control the crystal growth and the orientation in each first layer 11. In this regard, if the weight ratio of the first layers 11 with respect to the whole molded film 1 is less than the above lower limit value, there is a fear that the orientation control of the crystals is not sufficiently performed depending on the types of the crystalline resin "A", and thus the effect of improving the gas barrier property is reduced. Further, a case where the weight ratio of the first layers 11 with respect to the whole molded film 1 exceeds the above upper limit value is also the same as above.

Here, in the case where the average layer thickness of the first layers 11 is defined as "a" [nm] and the average layer thickness of the second layers 12 is defined as "b" [nm], "a" and "b" can be set so as to satisfy a relationship of "a≤b". If such a relationship is satisfied, that is, if the average layer thickness "a" of the first layers 11 is equal to or smaller than the average layer thickness "b" of the second layers 12, it is possible to control growth directions of the crystals (the crystalline components) of the crystalline resin "A". Therefore, the crystalline resin "A" can be easily formed into the at least one type of the anisotropic crystals whose molecular chain axes are oriented in the inclined direction with respect to the film plane and the anisotropic crystals whose molecular chain axes are oriented in the horizontal direction with respect to the film plane.

As a result, the multilayer film reliably exhibits the excellent gas barrier property without being subjected to the stretching process. Further, each second layer 12 has a sufficient thickness as compared with each first layer 11. Therefore, in the case where the molded film 1 is manufactured by subjecting the multilayer film to the molding process (the secondary molding) to form the storage portions 20 therein, each second layer 12 can reliably impart the superior moldability to the multilayer film. For this reason, the molded film 1 can appropriately maintain the excellent gas barrier property which the multilayer film inherently has.

Further, if, generally, a total laminated number of the first layers 11 and the second layers 12 is reduced, the degree of orientation of the anisotropic crystals of the crystalline resin "A" tends to be lowered in each first layer 11. However, by satisfying the relationship of "a≤b", it is possible to prevent or suppress the lowering of the degree of orientation. Therefore, even if the total laminated number of the first layers 11 and the second layers 12 is reduced, it is possible to impart the excellent gas barrier property to not only the multilayer film but also the molded film 1. In other words, in the case where a multilayer film (a molded film 1), in which a total laminated number of the first layers 11 and the second layers 12 is small, is manufactured, it is preferred that "a" and "b" are set so as to satisfy the relationship of "a≤b".

In this way, the average layer thickness "a" [nm] of the first layers and the average layer thickness "b" [nm] of the second layers can be set so as to satisfy the relationship of "a≤b". Here, a ratio ("a/b") thereof is preferably in the range of 0.10 to 1.00, and more preferably in the range of 0.43 to 1.00. In this case, the effect obtained by satisfying the above mentioned relationship of "a≤b" can be more markedly exhibited.

In order that each second layer 12 exhibits the above mentioned function by satisfying such a relationship and the gas barrier property of each second layer 12 is improved, the average layer thickness of the second layers 12 is preferably in the range of 50 to 2,000 nm, more preferably in the range of 50 to 1,000 nm, and even more preferably in the range of 50 to 200 nm. If the average layer thickness of the second layers 12 exceeds the above upper limit value, a ratio of portions where the structural control of the crystals (the polymeric crystals) of the thermoplastic resin "B" has been completed in each second layer 12 is decreased depending to the types of the thermoplastic resin "B", and thus there is a fear that the effect of improving the gas barrier property cannot be sufficiently obtained. Further, a case where the average layer thickness of the second layers 12 is less than the above lower limit value is also the same as above. Furthermore, there is also a fear that the moldability of the molded film (the multilayer film) 1 is lowered.

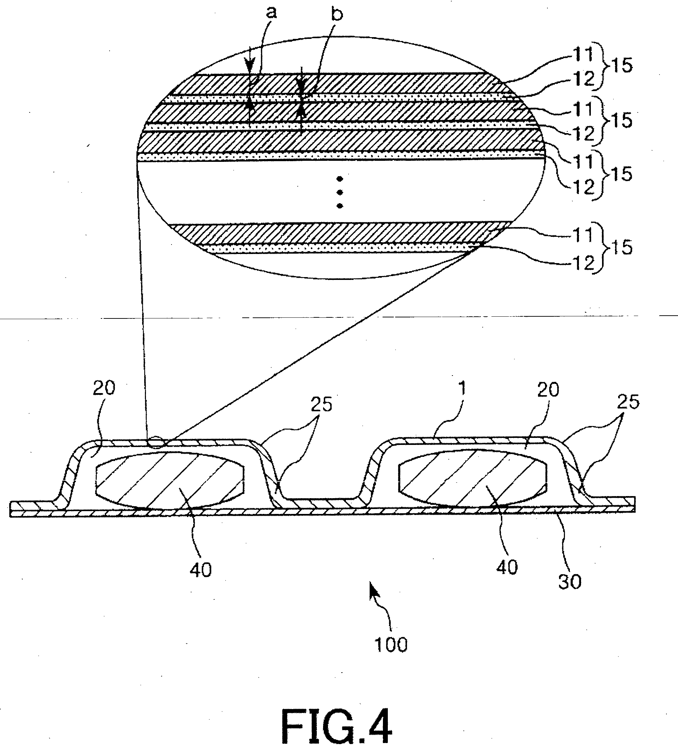

Further, in the multilayer film of the present invention, in the case where the average layer thickness of the first layers 11 is defined as "a" [nm] and the average layer thickness of the second layers 12 is defined as "b" [nm], "a" and "b" can be also set so as to satisfy a relationship of "a>b" as shown in FIG. 4. If such a relationship is satisfied, that is, if the average layer thickness "a" of the first layers 11 is larger than the average layer thickness "b" of the second layers 12, it is possible for each first layer 11 to maintain a sufficient thickness. Therefore, even when the molded film 1 is manufactured by subjecting the multilayer film to the molding process (the secondary molding) to form the storage portions 20 therein, it is possible to prevent each first layer 11 from being fractured at curved portions 25 which are generated by forming the storage portions 20 to thereby maintain the sufficient thickness for exhibiting the gas barrier property. Further, in each first layer 11, the crystalline resin "A" is formed into the at least one type of the anisotropic crystals whose molecular chain axes are oriented in the inclined direction with respect to the film plane and the anisotropic crystals whose molecular chain axes are oriented in the horizontal direction with respect to the film plane.

As a result, the multilayer film reliably exhibits the excellent gas barrier property without being subjected to the stretching process. Further, when the molded film 1 is manufactured by subjecting the multilayer film to the molding process to form the storage portions 20 therein, each second layer 12 can impart the superior moldability to the multilayer film. For this reason, the molded film 1 after being subjected to the molding process can appropriately maintain the excellent gas barrier property which the multilayer film inherently has.

In this way, the average layer thickness "a" [nm] of the first layers and the average layer thickness "b" [nm] of the second layers can be set so as to satisfy the relationship of "a>b". Here, a ratio ("a/b") thereof is preferably more than 1.00 but 9.00 or less, and more preferably more than 1.00 but 2.33 or less. In this case, the effect obtained by satisfying the above mentioned relationship of "a>b" can be more markedly exhibited.

Further, by setting the average layer thickness of the first layers 11 within the above range, it is possible to more reliably prevent each first layer 11 from being fractured at the curved portions 25 to thereby appropriately maintain the sufficient thickness for exhibiting the gas barrier property. In this regard, the average layer thickness of the first layers 11 is less than the above lower limit value, there is a fear that not only the above mentioned inexpedience occurs but also the moldability of the molded film (the multilayer film) 1 is lowered. In other words, there is a fear that each first layer 11 cannot sufficiently exhibit the gas barrier property by being fractured at the curved portions 25 depending on conditions of the molding process (the secondary molding) or the like.

In order that each second layer 12 exhibits the above mentioned function by satisfying such a relationship and the gas barrier property of each second layer 12 is improved, the average layer thickness of the second layers 12 is preferably in the range of 5 to 900 nm, and more preferably in the range of 5 to 100 nm. If the average layer thickness of the second layers 12 exceeds the above upper limit value, a ratio of portions where the structural control of the crystals (the polymeric crystals) of the thermoplastic resin "B" has been completed in each second layer 12 is decreased depending to the types of the thermoplastic resin "B", and thus there is a fear that the effect of improving the gas barrier property is not sufficiently obtained. Further, a case where the average layer thickness of the second layers 12 is less than the above lower limit value is also the same as above. Furthermore, there is also a fear that the moldability of the molded film (the multilayer film) 1 is lowered.

Further, the molded film 1 includes the plurality of repeating portions 15 each composed of the laminated body (the unit layer), in which the first layer 11 and the second layer 12 are laminated together, in a laminated manner. The number of the repeating portions 15 is not particularly limited, but is preferably in the range of 10 to 10,000, and more preferably in the range of 100 to 5,000. In the case where the number of the repeating portions 15 included in the molded film 1 falls within the above range, by further setting the average layer thickness of the first layers 11 within the above range, it is possible to more precisely control the growth of the crystalline components of the crystalline resin "A" to thereby more reliably obtain a film having a high gas barrier property.

Especially, in the case where the molded film (the multilayer film) 1 includes first layers 11 each having a thickness of 100 nm or less in the number of 100 or more, it is possible to further improve the gas barrier property of the molded film 1. Further, in the case where the molded film (the multilayer film) 1 includes the first layers 11 each having the thickness of 100 nm or less in the number of 1,000 or more, it is possible to particularly improve the gas barrier property of the molded film 1. In this regard, an upper limit value of the number of the first layers 11 is not particularly limited, but is preferably 10,000 or less.

Further, an overall thickness (a total thickness) of the molded film 1 is also not particularly limited, but is preferably in the range of 1 to 1,000 µm, more preferably in the range of 50 to 500 µm, and even more preferably in the range of 100 to 250 µm. If the overall thickness of the molded film 1 is less than the above lower limit value, there is a fear that a handling property thereof due to easy appearance of wrinkle is lowered depending on the types of the crystalline resin "A" and the thermoplastic resin "B". On the other hand, if the overall thickness of the molded film 1 exceeds the above upper limit value, there is a fear that the film is hardly formed, productivity thereof is lowered due to the excess number of the layers, or a handling property during processing thereof is lowered due to too large thickness depending on the types of the crystalline resin "A" and the thermoplastic resin "B".

In the present invention, by constituting the molded film 1 so as to include the plurality of repeating portions 15 each composed of the laminated body (the unit layer), in which the first layer 11 and the second layer 12 are laminated together, in the laminated manner, the molded film 1 in which the storage portions 20 are formed also exhibits the excellent gas barrier property, as described above. The gas barrier property (the water vapor barrier property) of this molded film 1 can be defined by a water vapor transmission rate (a gas transmission rate) of the molded film 1 which is a transmission rate of water vapor (gas) passing through the molded film 1. Specifically, in the case where storage portions (concave portions) 20 each having a size of inner diameter Φ10.0 mm x height 4.5 mm are formed, the water vapor transmission rate of the molded film 1 via the storage portions 20 becomes 10.0 mg/day (40°C·90%RH) per 10 storage portions 20 or less. The multilayer film used for obtaining the molded film 1 in which the storage portions 20 are formed can be regarded as a film having both properties of the gas barrier property and the moldability.

Further, the water vapor transmission rate of the molded film 1 via the storage portions 20 each having the size of inner diameter Φ10.0 mm x height 4.5 mm has only to be 10.0 mg/day (40°C·90%RH) per 10 storage portions 20 or less, but is preferably 5.0 mg/day (40°C·90%RH) per 10 storage portions 20 or less, and more preferably 2.0 mg/day (40°C·90%RH) per 10 storage portions 20 or less.

In this regard, this water vapor transmission rate can be measured using a method described in JIS K 7126 (B method; isopiestic method).

Further, a gas barrier property of the molded film 1 in which the storage portions 20 are not formed, that is, a gas barrier property (a water vapor transmission rate) of the multilayer film is preferably 1.5 g/m²·day (40°C·90%RH) per 100 µm thickness or less, and more preferably 0.5 g/m²·day (40°C·90%RH) per 100 µm thickness or less. By using the multilayer film having the gas barrier property falling within the above range, in which the storage portions 20 are not formed, the molded film 1 in which the storage portions 20 are formed can also exhibit the excellent gas barrier property.

In this regard, in the molded film (the multilayer film) 1, it is preferred that the crystalline resin "A" is crystallized in each first layer 11 and the thermoplastic resin "B" is crystallized in each second layer 12. The orientation states of the crystals (the crystalline components) of the crystalline resin "A" and the thermoplastic resin "B" can be evaluated using an X-ray diffraction as follows.

Namely, in the case where an X-ray diffraction pattern derived from the crystals (the crystalline components) of at least one of the crystalline resin "A" and the thermoplastic resin "B" is observed on the molded film 1 as at least one of a shape having point-like intensity distribution in a circumferential direction "Φ" and a shape having arc-like intensity distribution in the circumferential direction "Φ", the at least one of the crystalline resin "A" and the thermoplastic resin "B" is formed into the at least one type of the anisotropic crystals whose molecular chain axes are oriented in the inclined direction with respect to the film plane and the anisotropic crystals whose molecular chain axes are oriented in the horizontal direction with respect to the film plane. This means that the crystals (the crystalline components) thereof are oriented in a high degree of orientation. Therefore, the molded film 1 exhibits the excellent gas barrier property as compared with a film formed of a conventional polymeric material and containing a lot of spherocrystals on which an X-ray diffraction pattern is mainly observed as a shape having circle-like intensity distribution in the circumferential direction "Φ".

In this regard, it is preferred that the X-ray diffraction pattern derived from the crystals (the crystalline components) of the crystalline resin "A" is observed on the molded film 1 as the at least one of the shape having point-like intensity distribution in the circumferential direction "Φ" and the shape having arc-like intensity distribution in the circumferential direction "Φ", and the X-ray diffraction pattern derived from the crystals (the crystalline components) of the thermoplastic resin "B" is also observed on the molded film 1 as the at least one of the shape having point-like intensity distribution in the circumferential direction "Φ" and the shape having arc-like intensity distribution in the circumferential direction "Φ". In this case, the molded film 1 further exhibits the excellent gas barrier property as compared with the film formed of the conventional polymeric material and containing a lot of the spherocrystals.

In this embodiment, the description has been made on the molded film (the multilayer film) 1 in which the plurality of repeating portions (unit layers) 15 are laminated together so that the first layers 11 and the second layers 12 alternately and repeatedly exist, that is, the molded film (the multilayer film) 1 in which the plurality of repeating portions each including the first layer 11 and the second layer 12 positioned on the side of one surface of the first layer 11 are repeatedly laminated together. However, the molded film (the multilayer film) 1 may include, for example, a third layer(s) containing a thermoplastic resin "C", which is(are) different from the first layers 11 each containing the crystalline resin "A" and the second layers 12 each containing the thermoplastic resin "B", as long as it (they) does (do) not disturb the effects of the present invention.

In the case where each repeating portion 15 includes, for example, 3 types of the first layer 11 containing the crystalline resin "A" (that is, an "A layer"), the second layer 12 containing the thermoplastic resin "B" (that is, a "B layer") and the third layer containing the thermoplastic resin "C" (that is, a "C layer"), each repeating portion 15 has only to include at least one A layer, at least one B layer and at least one C layer, respectively. Therefore, each repeating portion 15 can be composed of, for example, a BAC laminated body (unit layer) in which the A layer, the B layer and the C layer are laminated together in this order, or an ACAB laminated body (unit layer) in which the A layer, the C layer, the A layer and the B layer are laminated together in this order. In this case, the molded film 1 is preferably constructed by laminating the above repeating portions 15 together in an orderly manner so that (BAC laminated body)ₙ or B layer-(ACAB laminated body)n is obtained. Here, "n" is the number of the repeating portions 15.

The above molded film 1 can be obtained by preparing the plate-like multilayer film of the present invention, and then subjecting the multilayer film to the secondary process so that the multilayer film is deformed in the thickness direction thereof to from the storage portions 20 each protruding from one surface thereof.

In this regard, examples of a method for manufacturing the multilayer film include, but are not particularly limited, a coextrusion T die method such as a feed block method or a multimanifold method, in which the resin and the like being raw materials are melted and extruded using a plurality of extruding machines, and an air-cooling type or water-cooling type coextrusion inflation method. Among them, a method for forming layers using the coextrusion T die method is especially preferable as the method for manufacturing the multilayer film from the viewpoints that the thickness control of the respective layers is good.

Further, a method for accelerating the crystallization of the crystalline resin "A" and/or the thermoplastic resin "B" in the multilayer film obtained using the above mentioned manufacturing method is preferably a method for slowly cooling the multilayer film (a film-like laminated product) just after manufactured, but is not limited thereto. According to the slow cooling method, it is possible to optimize a crystallization speed of the crystalline resin "A" and/or the thermoplastic resin "B". This makes it possible to advance the crystalline orientation of the crystalline resin "A" and/or the thermoplastic resin "B" to thereby manufacture a multilayer film having a further excellent gas barrier property.

Furthermore, examples of a method for forming the storage portions 20 in the multilayer film, that is, a method for subjecting the multilayer film to the secondary process include, but are not particularly limited, a method for subjecting the multilayer film to vacuum forming, pressure forming, plug forming or the like.

In this embodiment, as shown in FIGs. 2 to 4, each tablet 40 is formed into a thick disc form. Therefore, as shown in FIG. 1, a profile of each storage portion 20 in which the tablet 40 is to be stored is a circular truncated cone shape, and a planar profile thereof is a circular shape. However, the planar profile of each storage portion 20 may be, for example, a polygonal shape such as a trigonal shape, a tetragonal shape, a pentagonal shape or a hexagonal shape, an oval shape or the like depending on the shape of the workpiece to be stored such as the tablet 40.

Further, in this embodiment, the molded film 1 has 8 storage portions 20. However, the number of the storage portions 20 is not limited thereto, and may be one or more.

Hereinabove, the multilayer film, the molded film and the packaging body of the present invention have been described, but the present invention is not limited thereto.

For example, the multilayer film or the molded film of the present invention may include any layer(s) capable of exhibiting the same function.

Further, in the packaging body of the present invention, each structure can be replaced by a structure capable of exhibiting the same function, or any structure(s) can be also added.

Furthermore, in the above embodiment, the packaging body is obtained by laminating the cover film to the molded film provided with the storage portions, but is not limited thereto. The packaging body may be, for example, a packing bag including: a bag obtained by laminating 2 multilayer films together and then thermally sealing outer edges thereof; and a workpiece packed inside the bag. Examples of the workpiece include foods such as meats, processed meats and fruits and vegetables, medical instruments such as needles, syringes, test kits and catheters.

### EXAMPLES

Hereinbelow, the present invention will be described in detail based on Examples thereof, but is not limited thereto.

### 1A. Manufacture of multilayer or monolayer film and molded film

### 1A-1. Manufacture of multilayer or monolayer film

### (Example 1A)

A high density polyethylene resin (HDPE) (produced by Prime Polymer Co., Ltd., "2100J", density: 953 kg/m³, weight average molecular weight: 63,000) as a crystalline resin "A" for forming first layers and a polypropylene resin (PP) (produced by Prime Polymer Co., Ltd., "J106G", density: 910 kg/m³, weight average molecular weight: 214,000) as a thermoplastic resin "B" for forming second layers were prepared, respectively.

A film-like laminated product was formed by melting the above respective high density polyethylene resin and polypropylene resin using extruding machines (produced by SanNT Co., Ltd., "SNT40-28 model number") to bring into melted products each having a temperature of 240°C, and then coextruding them using a feed block and a die. Thereafter, this laminated product was subjected to a heat treatment (an annealing treatment) to be slowly cooled. In this way, a multilayer film in which the first layers and the second layers alternately existed and 33 layers were laminated together in total was manufactured. Here, extruding amounts of the high density polyethylene resin and the polypropylene resin by the extruding machines were controlled so that a ratio of a total thickness "X" of the first layers to a total thickness "Y" of the second layers became 1:4.

In this regard, a thickness of the multilayer film was 80 µm.

### (Example 2A)

A multilayer film of Example 2A was manufactured using the same facility and conditions as Example 1A except that the extruding machines were adjusted so that the total laminated number of the first layers and the second layers became 65.

In this regard, a thickness of the multilayer film was 100 µm.

### (Example 3A)

A multilayer film of Example 3A was manufactured using the same facility and conditions as Example 1A except that the extruding machines were adjusted so that the total laminated number of the first layers and the second layers became 129.

In this regard, a thickness of the multilayer film was 50 µm.

### (Example 4A)

A multilayer film of Example 4A was manufactured using the same facility and conditions as Example 1A except that the extruding machines were adjusted so that the total laminated number of the first layers and the second layers became 257.

In this regard, a thickness of the multilayer film was 100 µm.

### (Example 5A)

A multilayer film of Example 5A was manufactured using the same facility and conditions as Example 1A except that the extruding machines were adjusted so that the total laminated number of the first layers and the second layers became 257.

In this regard, a thickness of the multilayer film was 50 µm.

### (Example 6A)

A multilayer film of Example 6A was manufactured using the same facility and conditions as Example 1A except that the extruding machines were adjusted so that the total laminated number of the first layers and the second layers became 1025.

In this regard, a thickness of the multilayer film was 300 µm.

### (Example 7A)

A multilayer film of Example 7A was manufactured using the same facility and conditions as Example 1A except that the extruding machines were adjusted so that the total laminated number of the first layers and the second layers became 4097.

In this regard, a thickness of the multilayer film was 300 µm.

### (Example 8A)

A multilayer film of Example 8A was manufactured using the same facility and conditions as Example 7A except that the extruding amounts of the high density polyethylene resin and the polypropylene resin by the extruding machines were controlled so that the ratio of the total thickness "X" of the first layers to the total thickness "Y" of the second layers became 3:7.

In this regard, a thickness of the multilayer film was 300 µm.

### (Example 9A)

A multilayer film of Example 9A was manufactured using the same facility and conditions as Example 7A except that the extruding amounts of the high density polyethylene resin and the polypropylene resin by the extruding machines were controlled so that the ratio of the total thickness "X" of the first layers to the total thickness "Y" of the second layers became 1:1.

In this regard, a thickness of the multilayer film was 300 µm.

### (Example 10A)

A multilayer film of Example 10A was manufactured using the same facility and conditions as Example 6A except that the extruding amounts- of the high density polyethylene resin and the polypropylene resin by the extruding machines were controlled so that the ratio of the total thickness "X" of the first layers to the total thickness "Y" of the second layers became 1:1.

In this regard, a thickness of the multilayer film was 300 µm.

### (Example 11A)

A multilayer film of Example 11A was manufactured using the same facility and conditions as Example 7A except that the extruding amounts of the high density polyethylene resin and the polypropylene resin by the extruding machines were controlled so that the ratio of the total thickness "X" of the first layers to the total thickness "Y" of the second layers became 7:3.

In this regard, a thickness of the multilayer film was 300 µm.

### (Example 12A)

A multilayer film of Example 12A was manufactured using the same facility and conditions as Example 7A except that the extruding amounts of the high density polyethylene resin and the polypropylene resin by the extruding machines were controlled so that the ratio of the total thickness "X" of the first layers to the total thickness "Y" of the second layers became 4:1.

In this regard, a thickness of the multilayer film was 300 µm.

### (Example 13A)

A multilayer film of Example 13A was manufactured using the same facility and conditions as Example 4A except that a high density polyethylene resin (HDPE) (produced by ASAHIKASEI CHEMICALS. CORPORATION, "T4750", density: 950 kg/m³, weight average molecular weight: 53,000) as the crystalline resin "A" for forming the first layers was used.

In this regard, a thickness of the multilayer film was 100 µm.

### (Example 14A)

A multilayer film of Example 14A was manufactured using the same facility and conditions as Example 4A except that a polycaprolactone resin (PCL) (produced by Perstorp, "Capa6500", density: 1,020 kg/m³, weight average molecular weight: 84,500) as the crystalline resin "A" for forming the first layers and a polystyrene resin (PS) (produced by dic, "CR3500", density: 1,060 kg/m³, weight average molecular weight: 210,000) as the thermoplastic resin "B" for forming the second layers were used, respectively.

In this regard, a thickness of the multilayer film was 100 µm.

### (Example 15A)

A multilayer film of Example 15A was manufactured using the same facility and conditions as Example 4A except that a polycaprolactone resin (PCL) (produced by Perstorp, "Capa6800", density: 1,020 kg/m³, weight average molecular weight: 120,000) as the crystalline resin "A" for forming the first layers and a polystyrene resin (PS) (produced by dic, "CR4500", density: 1,060 kg/m³, weight average molecular weight: 330,000) as the thermoplastic resin "B" for forming the second layers were used, respectively.

In this regard, a thickness of the multilayer film was 100 µm.

### (Example 16A)

A multilayer film of Example 16A was manufactured using the same facility and conditions as Example 4A except that a norbornene-ethylene copolymerized resin (NB-E) (norbornene:ethylene - 4:1 (weight ratio)) (produced by Polyplastics Co., Ltd., "TOPAS6013", density: 1,020 kg/m³, weight average molecular weight: 83,300) as the thermoplastic resin "B" for forming the second layers was used.

In this regard, a thickness of the multilayer film was 100 µm.

### (Comparative Example 1A)

A monolayer film was manufactured using the same conditions as Example 1A except that the polycaprolactone resin as the crystalline resin "A" in Example 14A was used alone.

### 1A-2. Manufacture of molded film

10 storage portions (Φ10.0 mm x 4.5 mm) were formed in each of the multilayer films of Examples 1A to 16A and the monolayer film of Comparative Example 1A using a blister packer (produced by CKD Corporation, "FBP-300E"). In this regard, the 10 storage portions were formed so as to arrange 2 lines, each including 5 storage portions arranged along a longitudinal direction of the film, along a lateral direction thereof. In this way, molded films of Examples 1A to 16A and Comparative Example 1A were manufactured.

### 2A. Evaluation

### 2A-1. Evaluation of multilayer or monolayer film

A laminated number, existence or non-existence of anisotropic crystals, a crystal structure by X-ray scattering measurement, a water vapor barrier property and a degree of orientation were evaluated on each of the multilayer films of Examples 1A to 16A and the monolayer film of Comparative Example 1A. Hereinbelow, these evaluation methods will be described.

### <Laminated number, existence or non-existence of anisotropic crystals>

A sample with a cross-sectional surface was formed by cutting each of the multilayer films of Examples 1A to 16A and the monolayer film of Comparative Example 1A using a microtome, and then a layer structure thereof was obtained by electron microscope observation. Namely, the cross-sectional surface of the sample was observed at a magnification of 1,000 to 100,000 times using "JSM-7500FA" produced by JEOL Ltd., a picture of the cross-sectional surface was recorded, and then the layer structure (existence or non-existence of anisotropic crystals oriented in a inclined direction and/or a horizontal direction in the first layers and the second layers) and the laminated number were measured.

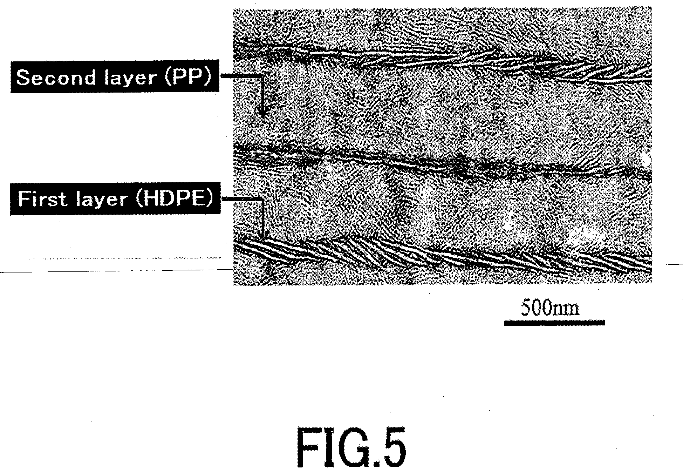

In this regard, the TEM picture of the cross-sectional surface of the multilayer film of Example 6A is shown in FIG. 5.

### <Crystal structure by X-ray scattering measurement>

Each of the multilayer films of Examples 1A to 16A and the monolayer film of Comparative Example 1A was evaluated using an X-ray diffraction apparatus "NANO Viewer" produced by Rigaku Corporation.

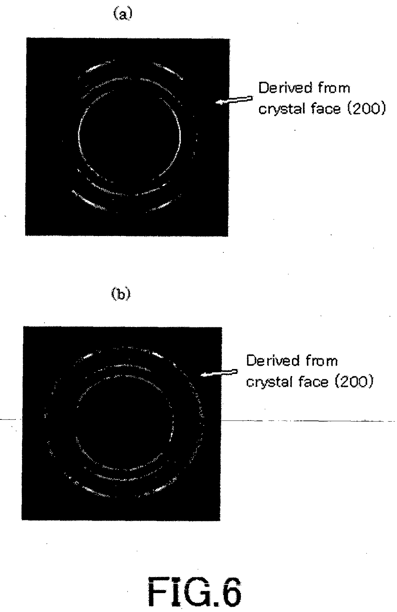

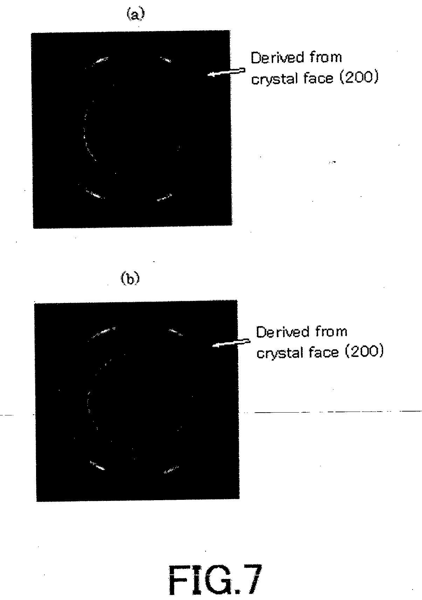

In this regard, an X-ray diffraction pattern derived from a crystal face (200) of the high density polyethylene resin in each of the multilayer films of Examples 1A, 2A, 4A and 5A is shown in each of FIGs. 6(a), 6(b), 7(a) and 7(b).

### <Water vapor barrier property>

The water vapor barrier property of each of the multilayer films of Examples 1A to 16A and the monolayer film of Comparative Example 1A was evaluated according to a method described in JIS K 7126 (B method; isopiestic method) using "PERMATRAN-W (registered trademark) 3/33" produced by MOCON, Inc.

### <Degree of orientation>

A degree of orientation in a layer in which the existence of the anisotropic crystals was observed was obtained according to the formula of Π = (180-H)/180. In this regard, "H" is a half-value width of a peak obtained by converting the X-ray diffraction pattern into a one-dimensional format.

### 2A-2. Evaluation of molded film

The water vapor barrier property of each of the molded films of Examples 1A to 16A and Comparative Example 1A was evaluated. Hereinbelow, this evaluation method will be described.

### <Water vapor barrier property>

The water vapor barrier property of each of the molded films of Examples 1A to 16A and Comparative Example 1A was carried out as follows. First, tablets of zeolite (Φ7.0 mm x 7.0 mm) were put into the respective 10 storage portions of each molded film, and then openings of the storage portions were sealed using a cover film made of aluminium to thereby obtain a packaging body. This packaging body was placed under an atmosphere of 40°C·90%RH for 24 hours, and then was opened to eject the tablets of zeolite. Thereafter, weight change of the tablets of zeolite was measured. By obtaining an amount of water vapor passing through the molded film via the storage portions (a water vapor transmission rate) based on the above measurement result, the water vapor barrier property of each molded film was evaluated.

The above evaluation results of each of Examples 1A to 16A and Comparative Example 1A are shown in Table 1.

[Table 1]

**Table 1**

| | Ex. 1A | Ex. 2A | Ex. 3A | Ex. 4A | Ex. 5A | Ex. 6A | Ex. 7A | Ex. 8A | Ex. 9A | Ex. 10A | Ex. 11A | Ex. 12A | Ex.13A | Ex. 14A | Ex.15A | Ex. 16A | Comp. Ex. 1A |
|---|---|---|---|---|---|---|---|---|---|---|---|---|---|---|---|---|---|
| Total laminated number | 33 | 65 | 129 | 257 | 257 | 1025 | 4097 | 4097 | 4097 | 1025 | 4097 | 4097 | 257 | 257 | 257 | 257 | 1 |
| Crystalline resin "A" | HDPE | HDPE | HDPE | HDPE | HDPE | HDPE | HDPE | HDPE | HDPE | HDPE | HDPE | HDPE | HDPE | PCL | PCL | HDPE | PCL |
| Density : kg/m³ | 953 | 953 | 953 | 953 | 953 | 953 | 953 | 953 | 953 | 953 | 953 | 953 | 950 | 1020 | 1020 | 953 | 1060 |
| Weight average molecular weight | 63000 | 63000 | 63000 | 63000 | 63000 | 63000 | 63000 | 63000 | 63000 | 63000 | 63000 | 63000 | 53000 | 84500 | 120000 | 63000 | 120000 |
| Thermoplastic resin "B" | PP | PP | PP | PP | PP | PP | PP | PP | PP | PP | PP | PP | PP | PS | PS | NB-E | - |
| Density: kg/m³ | 910 | 910 | 910 | 910 | 910 | 910 | 910 | 910 | 910 | 910 | 910 | 910 | 910 | 1060 | 1060 | 1020 | - |
| Weight average molecular weight | 214000 | 214000 | 214000 | 214000 | 214000 | 214000 | 214000 | 214000 | 214000 | 214000 | 214000 | 214000 | 214000 | 210000 | 330000 | 83300 | - |
| Total thickness ratio (X:Y) | 1:4 | 1:4 | 1:4 | 1:4 | 1:4 | 1:4 | 1:4 | 3:7 | 1:1 | 1:1 | 7:3 | 4:1 | 1:4 | 1:4 | 1:4 | 1:4 | - |
| Overall thickness : µm | 80 | 100 | 50 | 100 | 50 | 300 | 300 | 300 | 300 | 300 | 300 | 300 | 100 | 100 | 100 | 100 | 100 |
| First layer | | | | | | | | | | | | | | | | | |
| Average layer thickness: µm | 1 | 0.63 | 0.16 | 0.16 | 0.08 | 0.117 | 0.029 | 0.044 | 0.073 | 0.293 | 0.102 | 0.117 | 0.16 | 0.16 | 0.16 | 0.16 | 100 |
| Existence or non-existence of anisotropic crystals | Exist | Exist | Exist | Exist | Exist | Exist | Exist | Exist | Exist | Exist | Exist | Exist | Exist | Exist | Exist | Exist | Non- exist |
| Degree of orientation of anisotropic crystals | 0.76 | 0.77 | 0.81 | 0.91 | 0.92 | 0.93 | 0.94 | 0.94 | 0.97 | 0.91 | 0.98 | 0.97 | 0.89 | 0.9 | 0.91 | 0.83 | - |
| Second layer | | | | | | | | | | | | | | | | | |
| Average layer thickness: µm | 3.9 | 2.5 | 0.62 | 0.62 | 0.31 | 0.468 | 0.117 | 0.102 | 0.073 | 0.293 | 0.044 | 0.029 | 0.62 | 0.62 | 0.62 | 0.62 | - |
| Existence or non-existence of anisotropic crystals | Non-exist | Non-exist | Non-exist | Exist | Exist | Exist | Exist | Exist | Exist | Exist | Exist | Exist | Exist | Non-exist | Non-exist | Non-exist | - |
| Degree of orientation of anisotropic crystals | - | - | - | 0.79 | 0.81 | 0.83 | 0.83 | 0.88 | 0.89 | 0.9 | 0.94 | 0.95 | 0.78 | - | - | - | - |
| Water vapor barrier property | | | | | | | | | | | | | | | | | |
| Multilayer film: g/m²·day (per 100 µm thickness) | 1.22 | 1.09 | 1.06 | 0.98 | 0.82 | 0.90 | 0.48 | 0.42 | 0.30 | 0.60 | 0.28 | 0.72 | 1.02 | 7.40 | 6.90 | 0.90 | 200 |
| Molded film : mg/day (per 10 storage portions) | 6.10 | 4.36 | 8.48 | 3.92 | 9.84 | 1.80 | 1.68 | 1.55 | 1.50 | 1.10 | 1.40 | 1.42 | 4.08 | 9.87 | 9.20 | 1.28 | 267 |

As is obvious from Table 1, each of the molded films obtained by forming the storage portions in the multilayer films of Examples 1A to 16A had a water vapor transmission rate (a water vapor barrier property) of 10.0 mg/day (40°C·90%RH) per 10 storage portions or less.

In this regard, as shown in each of FIGs. 6 (a) and 6(b), in each of the multilayer films of Examples 1A and 2A, the X-ray diffraction pattern derived from the crystal face (200) of the high density polyethylene resin was observed as a shape having arc-like intensity distribution in a circumferential direction. As shown in each of FIGs. 7 (a) and 7(b), in each of the multilayer films of Examples 4A and 5A, the X-ray diffraction pattern derived from the crystal face (200) of the high density polyethylene resin was observed as a shape having point-like intensity distribution in the circumferential direction.

Further, as shown in FIG. 5, in the multilayer film of Example 6A, the existence of the anisotropic crystals whose molecular chain axes were oriented in an inclined direction with respect to a film plane was observed.

On the other hand, the molded film obtained by forming the storage portions in the multilayer film of Comparative Example 1A had a water vapor transmission rate (a water vapor barrier property) obviously exceeding 10.0 mg/day (40°C·90%RH) per 10 storage portions. These results indicate that the water vapor barrier property of the molded film of Comparative Example 1A is inferior to that of each of the molded films of Examples 1A to 16A.

### 1B. Manufacture of multilayer or monolayer film and molded film

### 1B-1. Manufacture of multilayer or monolayer film

### (Example 1B)

A high density polyethylene resin (HDPE) (produced by Prime Polymer Co., Ltd., "2100J", density: 953 kg/m³, weight average molecular weight: 63,000) as a crystalline resin "A" for forming first layers and a polypropylene resin (PP) (produced by Prime Polymer Co., Ltd., "J106G", density: 910 kg/m³, weight average molecular weight: 214,000) as a thermoplastic resin "B" for forming second layers were prepared, respectively.

A film-like laminated product was formed by melting the above respective high density polyethylene resin and polypropylene resin using extruding machines (produced by SanNT Co., Ltd., "SNT40-28 model number") to bring into melted products each having a temperature of 240°C, and then coextruding them using a feed block and a die. Thereafter, this laminated product was subjected to a heat treatment (an annealing treatment) to be slowly cooled. In this way, a multilayer film in which the first layers and the second layers alternately existed and 33 layers were laminated together in total was manufactured. Here, extruding amounts of the high density polyethylene resin and the polypropylene resin by the extruding machines were controlled so that a ratio of a total thickness "X" of the first layers to a total thickness "Y" of the second layers became 1:4.

In this regard, a thickness of the multilayer film was 80 µm.

### (Example 2B)

A multilayer film of Example 2B was manufactured using the same facility and conditions as Example 1B except that the extruding machines were adjusted so that the total laminated number of the first layers and the second layers became 65.

In this regard, a thickness of the multilayer film was 100 µm.

### (Example 3B)

A multilayer film of Example 3B was manufactured using the same facility and conditions as Example 1B except that the extruding machines were adjusted so that the total laminated number of the first layers and the second layers became 129.

In this regard, a thickness of the multilayer film was 50 µm.

### (Example 4B)

A multilayer film of Example 4B was manufactured using the same facility and conditions as Example 1B except that the extruding machines were adjusted so that the total laminated number of the first layers and the second layers became 257.

In this regard, a thickness of the multilayer film was 100 µm.

### (Example 5B)

A multilayer film of Example 5B was manufactured using the same facility and conditions as Example 1B except that the extruding machines were adjusted so that the total laminated number of the first layers and the second layers became 257.

In this regard, a thickness of the multilayer film was 50 µm.

### (Example 6B)

A multilayer film of Example 6B was manufactured using the same facility and conditions as Example 1B except that the extruding machines were adjusted so that the total laminated number of the first layers and the second layers became 1025.

In this regard, a thickness of the multilayer film was 300 µm.

### (Example 7B)

A multilayer film of Example 7B was manufactured using the same facility and conditions as Example 1B except that the extruding machines were adjusted so that the total laminated number of the first layers and the second layers became 4097.

In this regard, a thickness of the multilayer film was 300 µm.

### (Example 8B)

A multilayer film of Example 8B was manufactured using the same facility and conditions as Example 7B except that the extruding amounts of the high density polyethylene resin and the polypropylene resin by the extruding machines were controlled so that the ratio of the total thickness "X" of the first layers to the total thickness "Y" of the second layers became 3:7.

In this regard, a thickness of the multilayer film was 300 µm.

### (Example 9B)

A multilayer film of Example 9A was manufactured using the same facility and conditions as Example 7B except that the extruding amounts of the high density polyethylene resin and the polypropylene resin by the extruding machines were controlled so that the ratio of the total thickness "X" of the first layers to the total thickness "Y" of the second layers became 1:1.

In this regard, a thickness of the multilayer film was 300 µm.

### (Example 10B)

A multilayer film of Example 10B was manufactured using the same facility and conditions as Example 6B except that the extruding amounts of the high density polyethylene resin and the polypropylene resin by the extruding machines were controlled so that the ratio of the total thickness "X" of the first layers to the total thickness "Y" of the second layers became 1:1.

In this regard, a thickness of the multilayer film was 300 µm.

### (Example 11B)

A multilayer film of Example 11B was manufactured using the same facility and conditions as Example 7B except that the extruding amounts of the high density polyethylene resin and the polypropylene resin by the extruding machines were controlled so that the ratio of the total thickness "X" of the first layers to the total thickness "Y" of the second layers became 7:3.

In this regard, a thickness of the multilayer film was 300 µm.

### (Example 12B)

A multilayer film of Example 12B was manufactured using the same facility and conditions as Example 7B except that the extruding amounts of the high density polyethylene resin and the polypropylene resin by the extruding machines were controlled so that the ratio of the total thickness "X" of the first layers to the total thickness "Y" of the second layers became 4:1.

In this regard, a thickness of the multilayer film was 300 µm.

### (Example 13B)

A multilayer film of Example 13B was manufactured using the same facility and conditions as Example 4B except that a high density polyethylene resin (HDPE) (produced by ASAHIKASEI CHEMICALS. CORPORATION, "T4750", density: 950 kg/m³, weight average molecular weight: 53,000) as the crystalline resin "A" for forming the first layers was used.

In this regard, a thickness of the multilayer film was 100 µm.

### (Example 14B)

A multilayer film of Example 14B was manufactured using the same facility and conditions as Example 4B except that a polycaprolactone resin (PCL) (produced by Perstorp, "Capa6500", density: 1,020 kg/m³, weight average molecular weight: 84,500) as the crystalline resin "A" for forming the first layers and a polystyrene resin (PS) (produced by dic, "CR3500", density: 1,060 kg/m³, weight average molecular weight: 210,000) as the thermoplastic resin "B" for forming the second layers were used, respectively.

In this regard, a thickness of the multilayer film was 100 µm.

### (Example 15B)

A multilayer film of Example 15B was manufactured using the same facility and conditions as Example 4B except that a polycaprolactone resin (PCL) (produced by Perstorp, "Capa6800", density: 1,020 kg/m³, weight average molecular weight: 120,000) as the crystalline resin "A" for forming the first layers and a polystyrene resin (PS) (produced by dic, "CR4500", density: 1,060 kg/m³, weight average molecular weight: 330,000) as the thermoplastic resin "B" for forming the second layers were used, respectively.

In this regard, a thickness of the multilayer film was 100 µm.

### (Example 16B)

A multilayer film of Example 16B was manufactured using the same facility and conditions as Example 4B except that a norbornene-ethylene copolymerized resin (NB-E) (norbornene:ethylene - 4:1 (weight ratio)) (produced by Polyplastics Co., Ltd., "TOPAS6013", density: 1,020 kg/m³, weight average molecular weight: 83,300) as the thermoplastic resin "B" for forming the second layers was used.

In this regard, a thickness of the multilayer film was 100 µm.

### (Comparative Example 1B)

A monolayer film was manufactured using the same conditions as Example 1B except that the polycaprolactone resin as the crystalline resin "A" in Example 14B was used alone.

### (Comparative Example 2B)

A multilayer film of Comparative Example 2B was manufactured using the same facility and conditions as Example 4B except that a polyethylene terephthalate resin (PET) (produced by Mitsubishi Chemical Corporation, "GM700Z", density: 1,400 kg/m³, weight average molecular weight: 18,000) as the crystalline resin "A" for forming the first layers was used.

In this regard, a thickness of the multilayer film was 100 µm.

### 1B-2. Manufacture of molded film

10 storage portions (Φ10.0 mm x 4.5 mm) were formed in each of the multilayer films of Examples 1B to 16B and Comparative Example 2B and the monolayer film of Comparative Example 1B using a blister packer (produced by CKD Corporation, "FBP-300E"). In this regard, the 10 storage portions were formed so as to arrange 2 lines, each including 5 storage portions arranged along a longitudinal direction of the film, along a lateral direction thereof. In this way, molded films of Examples 1B to 16B and Comparative Examples 1B and 2B were manufactured.

### 2B. Evaluation

### 2B-1. Evaluation of multilayer or monolayer film

A laminated number, existence or non-existence of anisotropic crystals, a crystal structure by X-ray scattering measurement, a water vapor barrier property and a degree of orientation were evaluated on each of the multilayer films of Examples 1B to 16B and Comparative Example 2B and the monolayer film of Comparative Example 1B. Hereinbelow, these evaluation methods will be described.

### <Laminated number, existence or non-existence of anisotropic crystals>

A sample with a cross-sectional surface was formed by cutting each of the multilayer films of Examples 1B to 16B and Comparative Example 2B and the monolayer film of Comparative Example 1B using a microtome, and then a layer structure thereof was obtained by electron microscope observation. Namely, the cross-sectional surface of the sample was observed at a magnification of 1,000 to 100,000 times using "JSM-7500FA" produced by JEOL Ltd., a picture of the cross-sectional surface was recorded, and then the layer structure (existence or non-existence of anisotropic crystals oriented in a inclined direction and/or a horizontal direction in the first layers and the second layers) and the laminated number were measured.

In this regard, the TEM picture of the cross-sectional surface of the multilayer film of Example 6B is shown in FIG. 5.

### <Crystal structure by X-ray scattering measurement>

Each of the multilayer films of Examples 1B to 16B and Comparative Example 2B and the monolayer film of Comparative Example 1B was evaluated using an X-ray diffraction apparatus "NANO Viewer" produced by Rigaku Corporation.

In this regard, an X-ray diffraction pattern derived from a crystal face (200) of the high density polyethylene resin in each of the multilayer films of Examples 1B, 2B, 4B and 5B is shown in each of FIGs. 6(a), 6(b), 7(a) and 7(b).

### <Water vapor barrier property>

The water vapor barrier property of each of the multilayer films of Examples 1B to 16B and Comparative Example 2B and the monolayer film of Comparative Example 1B was evaluated according to a method described in JIS K 7126 (B method; isopiestic method) using "PERMATRAN-W (registered trademark) 3/33" produced by MOCON, Inc.

### <Degree of orientation>

A degree of orientation in a layer in which the existence of the anisotropic crystals was observed was obtained according to the formula of π = (180-H)/180. In this regard, "H" is a half-value width of a peak obtained by converting the X-ray diffraction pattern into a one-dimensional format.

### 2B-2. Evaluation of molded film

The water vapor barrier property of each of the molded films of Examples 1B to 16B and Comparative Examples 1B and 2B was evaluated. Hereinbelow, this evaluation method will be described.

### <Water vapor barrier property>

The water vapor barrier property of each of the molded films of Examples 1B to 16B and Comparative Examples 1B and 2B was carried out as follows. First, tablets of zeolite (Φ7.0 mm x 7.0 mm) were put into the respective 10 storage portions of each molded film, and then openings of the storage portions were sealed using a cover film made of aluminium to thereby obtain a packaging body. This packaging body was placed under an atmosphere of 40°C·90%RH for 24 hours, and then was opened to eject the tablets of zeolite. Thereafter, weight change of the tablets of zeolite was measured. By obtaining an amount of water vapor passing through the molded film via the storage portions (a water vapor transmission rate) based on the above measurement result, the water vapor barrier property of each molded film was evaluated.

The above evaluation results of each of Examples 1B to 16B and Comparative Examples 1B and 2B are shown in Table 2.

[Table 2]

**Table 2**

| | Ex.1B | Ex. 2B | Ex. 3B | Ex. 4B | Ex. 5B | Ex. 6B | Ex. 7B | Ex. 8B | Ex. 9B | Ex. 10B | Ex. 11B | Ex. 12B | Ex. 13B | Ex. 14B | Ex. 5B | Ex. 16B | Comp. Ex. 1B | Comp. Ex. 2B |
|---|---|---|---|---|---|---|---|---|---|---|---|---|---|---|---|---|---|---|
| Total laminated number | 33 | 65 | 129 | 257 | 257 | 1025 | 4097 | 4097 | 4097 | 1025 | 4097 | 4097 | 257 | 257 | 257 | 257 | 1 | 257 |
| Crystalline resin "A" | HDPE | HDPE | HDPE | HDPE | HDPE | HDPE | HDPE | HDPE | HDPE | HYPE | HDPE | HDPE | HDPE | PCL | PCL | HDPE | PCL | PET |
| Density : kg/m³ | 953 | 953 | 953 | 953 | 953 | 953 | 953 | 953 | 953 | 953 | 953 | 953 | 950 | 1020 | 1020 | 953 | 1060 | 1400 |
| Weight average molecular weight | 63000 | 63000 | 63000 | 63000 | 63000 | 63000 | 63000 | 63000 | 63000 | 63000 | 63000 | 63000 | 53000 | 84500 | 120000 | 63000 | 120000 | 18000 |
| Thermoplastic resin "B" | PP | PP | PP | PP | PP | PP | PP | PP | PP | PP | PP | PP | PP | PS | PS | NB-E | - | PP |
| Density: kg/m³ | 910 | 910 | 910 | 910 | 910 | 910 | 910 | 910 | 910 | 910 | 910 | 910 | 910 | 1060 | 1060 | 1020 | - | 910 |
| Weight average molecular weight | 214000 | 214000 | 214000 | 214000 | 214000 | 214000 | 214000 | 214000 | 214000 | 214000 | 214000 | 214000 | 214000 | 210000 | 330000 | 83300 | - | 214000 |
| Total thickness ratio (X:Y) | 1:4 | 1:4 | 1:4 | 1:4 | 1:4 | 1:4 | 1:4 | 3:7 | 1:1 | 1:1 | 7:3 | 4:1 | 1:4 | 1:4 | 1:4 | 1:4 | - | 1:4 |
| Overall thickness : %µm | 80 | 100 | 50 | 100 | 50 | 300 | 300 | 300 | 300 | 300 | 300 | 300 | 100 | 100 | 100 | 100 | 100 | 100 |
| First layer | | | | | | | | | | | | | | | | | | |
| Average layer thickness: µm | 1 | 0.63 | 0.16 | 0.16 | 0.08 | 0.117 | 0.029 | 0.044 | 0.073 | 0.293 | 0.102 | 0.117 | 0.16 | 0.16 | 0.16 | 0.16 | 100 | 0.16 |
| Existence or non-existence of anisotropic crystals | Exist | Exist | Exist | Exist | Exist | Exist | Exist | Exist | Exist | Exist | Exist | Exist | Exist | Exist | Exist | Exist | Non-exist | Non-exist |
| Degree of orientation. of anisotropic crystals | 0.76 | 0.77 | 0.81 | 0.91 | 0.92 | 0.93 | 0.94 | 0.94 | 0.97 | 0.91 | 0.98 | 0.97 | 0.89 | 0.9 | 0.91 | 0.83. | - | - |
| Second laver | | | | | | | | | | | | | | | | | | |
| Average layer thickness: µm | 3.9 | 2.5 | 0.62 | 0.62 | 0.31 | 0.468 | 0.117 | 0.102 | 0.073 | 0.293 | 0.044 | 0.029 | 0.62 | 0.62 | 0.62 | 0.62 | - | 0.62 |
| Existence or non-existence of anisotropic crystals | Non-exist | Non-exist | Non-exist | Exist | Exist | Exist | Exist | Exist | Exist | Exist | Exist | Exist | Exist | Non-exist | Non-exist | Non-exist | - | Non-exist |
| Degree of orientation of anisotropic crystals | - | - | - | 0.79 | 0.81 | 0.83 | 0.83 | 0.88 | 0.89 | 0.9 | 0.94 | 0.95 | 0.78 | - | - | - | - | - |
| Water vapor barrier property | | | | | | | | | | | | | | | | | | |
| Multilayer film : g/m²·day (per 100 µm thickness) | 1.22 | 1.09 | 1.06 | 0.98 | 0.82 | 0.90 | 0.48 | 0.42 | 0.30 | 0.60 | 0.28 | 0.72 | 1.02 | 7.40 | 6.90 | 0.90 | 200 | 14 |
| Molded film : mg/day (per 10 storage portions) | 6.10 | 4.36 | 8.48 | 3.92 | 9.84 | 1.80 | 1.68 | 1.55 | 1.50 | 1.10 | 1.40 | 1.42 | 4.08 | 9.87 | 9.20 | 1.28 | 267 | 56 |

As is obvious from Table 2, in at least the first layers of each of the multilayer films of Examples 1B to 16B, the crystalline resin "A" was formed into anisotropic crystals whose molecular chain axes were oriented in an inclined direction and/or in a horizontal direction with respect to a film plane. Due to this fact, each of the multilayer films of Examples 1B to 16B exhibited an excellent gas barrier property. Further, each of the molded films of Examples 1B to 16B also exhibited the same tendency as each of the multilayer films of Examples 1B to 16B.

In this regard, as shown in each of FIGs. 6(a) and 6(b), in each of the multilayer films of Examples 1B and 2B, the X-ray diffraction pattern derived from the crystal face (200) of the high density polyethylene resin was observed as a shape having arc-like intensity distribution in a circumferential direction. As shown in each of FIGs. 7(a) and 7(b), in each of the multilayer films of Examples 4B and 5B, the X-ray diffraction pattern derived from the crystal face (200) of the high density polyethylene resin was observed as a shape having point-like intensity distribution in the circumferential direction.

Further, as shown in FIG. 5, in the multilayer film of Example 6B, the existence of the anisotropic crystals whose molecular chain axes were oriented in the inclined direction with respect to the film plane was observed.

On the other hand, in the monolayer film of Comparative Example 1B, anisotropic crystals whose molecular chain axes were oriented in an inclined direction and/or in a horizontal direction with respect to a film plane could not be observed. Further, in the multilayer film of Comparative Example 2B, anisotropic crystals whose molecular chain axes were oriented in an inclined direction and/or in a horizontal direction with respect to a film plane could not be observed in both the first layers and the second layers. These results indicate that the water vapor barrier property of each of the monolayer film of Comparative Example 1B, the multilayer film of Comparative Example 2B and the molded films of Comparative Examples 1B and 2B is inferior to that of each of the multilayer films and the molded films of Examples 1B to 16B.

### 1C. Manufacture of multilayer film and molded film

### 1C-1. Manufacture of multilayer film

### (Example 1C)

A high density polyethylene resin (HDPE) (produced by Prime Polymer Co., Ltd., "2100J", density: 953 kg/m³, weight average molecular weight: 63,000) as a crystalline resin "A" for forming first layers and a polypropylene resin (PP) (produced by Prime Polymer Co., Ltd., "J106G", density: 910 kg/m³, weight average molecular weight: 214,000) as a thermoplastic resin "B" for forming second layers were prepared, respectively.

A film-like laminated product was formed by melting the above respective high density polyethylene resin and polypropylene resin using extruding machines (produced by SanNT Co., Ltd., "SNT40-28 model number") to bring into melted products each having a temperature of 240°C, and then coextruding them using a feed block and a die. Thereafter, this laminated product was subjected to a heat treatment (an annealing treatment) to be slowly cooled. In this way, a multilayer film in which the first layers and the second layers alternately existed and 33 layers were laminated together in total was manufactured. Here, extruding amounts of the high density polyethylene resin and the polypropylene resin by the extruding machines were controlled so that a ratio of a total thickness "X" of the first layers to a total thickness "Y" of the second layers became 1:4.

In this regard, a thickness of the multilayer film was 80 µm.

### (Example 2C)

A multilayer film of Example 2C was manufactured using the same facility and conditions as Example 1C except that the extruding machines were adjusted so that the total laminated number of the first layers and the second layers became 65.

In this regard, a thickness of the multilayer film was 100 µm.

### (Example 3C)

A multilayer film of Example 3C was manufactured using the same facility and conditions as Example 1C except that the extruding machines were adjusted so that the total laminated number of the first layers and the second layers became 129.

In this regard, a thickness of the multilayer film was 50 µm.

### (Example 4C)

A multilayer film of Example 4C was manufactured using the same facility and conditions as Example 1C except that the extruding machines were adjusted so that the total laminated number of the first layers and the second layers became 257.

In this regard, a thickness of the multilayer film was 100 µm.

### (Example 5C)

A multilayer film of Example 5C was manufactured using the same facility and conditions as Example 1C except that the extruding machines were adjusted so that the total laminated number of the first layers and the second layers became 257.

In this regard, a thickness of the multilayer film was 50 µm.

### (Example 6C)

A multilayer film of Example 6C was manufactured using the same facility and conditions as Example 1C except that the extruding machines were adjusted so that the total laminated number of the first layers and the second layers became 1025.

In this regard, a thickness of the multilayer film was 300 µm.

### (Example 7C)

A multilayer film of Example 7C was manufactured using the same facility and conditions as Example 1C except that the extruding machines were adjusted so that the total laminated number of the first layers and the second layers became 4097.

In this regard, a thickness of the multilayer film was 300 µm.

### (Example 8C)

A multilayer film of Example 8C was manufactured using the same facility and conditions as Example 7C except that the extruding amounts of the high density polyethylene resin and the polypropylene resin by the extruding machines were controlled so that the ratio of the total thickness "X" of the first layers to the total thickness "Y" of the second layers became 3:7.

In this regard, a thickness of the multilayer film was 300 µm.

### (Example 9C)

A multilayer film of Example 9C was manufactured using the same facility and conditions as Example 7C except that the extruding amounts of the high density polyethylene resin and the polypropylene resin by the extruding machines were controlled so that the ratio of the total thickness "X" of the first layers to the total thickness "Y" of the second layers became 1:1.

In this regard, a thickness of the multilayer film was 300 µm.

### (Example 10C)

A multilayer film of Example 10C was manufactured using the same facility and conditions as Example 6C except that the extruding amounts of the high density polyethylene resin and the polypropylene resin by the extruding machines were controlled so that the ratio of the total thickness "X" of the first layers to the total thickness "Y" of the second layers became 1:1.

In this regard, a thickness of the multilayer film was 300 µm.

### (Example 11C)

A multilayer film of Example 11C was manufactured using the same facility and conditions as Example 4C except that a high density polyethylene resin (HDPE) (produced by ASAHIKASEI CHEMICALS. CORPORATION, "T4750", density: 950 kg/m³, weight average molecular weight: 53,000) as the crystalline resin "A" for forming the first layers was used.

In this regard, a thickness of the multilayer film was 100 µm.

### (Example 12C)

A multilayer film of Example 12C was manufactured using the same facility and conditions as Example 4C except that a polycaprolactone resin (PCL) (produced by Perstorp, "Capa6500", density: 1,020 kg/m³, weight average molecular weight: 84,500) as the crystalline resin "A" for forming the first layers and a polystyrene resin (PS) (produced by dic, "CR3500", density: 1,060 kg/m³, weight average molecular weight: 210,000) as the thermoplastic resin "B" for forming the second layers were used, respectively.

In this regard, a thickness of the multilayer film was 100 µm.

### (Example 13C)

A multilayer film of Example 13C was manufactured using the same facility and conditions as Example 4C except that a polycaprolactone resin (PCL) (produced by Perstorp, "Capa6800", density: 1,020 kg/m³, weight average molecular weight: 120,000) as the crystalline resin "A" for forming the first layers and a polystyrene resin (PS) (produced by dic, "CR4500", density: 1,060 kg/m³, weight average molecular weight: 330,000) as the thermoplastic resin "B" for forming the second layers were used, respectively.

In this regard, a thickness of the multilayer film was 100 µm.

### (Example 14C)

A multilayer film of Example 14C was manufactured using the same facility and conditions as Example 4C except that a norbornene-ethylene copolymerized resin (NB-E) (norbornene:ethylene = 4:1 (weight ratio)) (produced by Polyplastics Co., Ltd., "TOPAS6013", density: 1,020 kg/m³, weight average molecular weight: 83,300) as the thermoplastic resin "B" for forming the second layers was used.

In this regard, a thickness of the multilayer film was 100 µm.

### (Comparative Example 1C)

A multilayer film of Comparative Example 1C was manufactured using the same facility and conditions as Example 12C except that the extruding amounts of the high density polyethylene resin and the polypropylene resin by the extruding machines were controlled so that the ratio of the total thickness "X" of the first layers to the total thickness "Y" of the second layers became 7:3.

In this regard, a thickness of the multilayer film was 100 µm.

### (Comparative Example 2C)

A multilayer film of Comparative Example 2C was manufactured using the same facility and conditions as Example 12C except that the extruding amounts of the high density polyethylene resin and the polypropylene resin by the extruding machines were controlled so that the ratio of the total thickness "X" of the first layers to the total thickness "Y" of the second layers became 4:1.

In this regard, a thickness of the multilayer film was 100 µm.

### 1C-2. Manufacture of molded film

10 storage portions (Φ10.0 mm x 4.5 mm) were formed in each of the multilayer films of Examples 1C to 14C and Comparative Examples 1C and 2C using a blister packer (produced by CKD Corporation, "FBP-300E"). In this regard, the 10 storage portions were formed so as to arrange 2 lines, each including 5 storage portions arranged along a longitudinal direction of the film, along a lateral direction thereof. In this way, molded films of Examples 1C to 14C and Comparative Examples 1C and 2C were manufactured.

### 2C. Evaluation

### 2C-1. Evaluation of multilayer film

A laminated number, existence or non-existence of anisotropic crystals, a crystal structure by X-ray scattering measurement, a water vapor barrier property and a degree of orientation were evaluated on each of the multilayer films of Examples 1C to 14C and Comparative Examples 1C and 2C. Hereinbelow, these evaluation methods will be described.

### <Laminated number, existence or non-existence of anisotropic crystal>

A sample with a cross-sectional surface was formed by cutting each of the multilayer films of Examples 1C to 14C and Comparative Examples 1C and 2C using a microtome, and then a layer structure thereof was obtained by electron microscope observation. Namely, the cross-sectional surface of the sample was observed at a magnification of 1,000 to 100,000 times using "JSM-7500FA" produced by JEOL Ltd., a picture of the cross-sectional surface was recorded, and then the layer structure (existence or non-existence of anisotropic crystals oriented in a inclined direction and/or a horizontal direction in the first layers and the second layers) and the laminated number were measured.

In this regard, the TEM picture of the cross-sectional surface of the multilayer film of Example 6C is shown in FIG. 5.

### <Crystal structure by X-ray scattering measurement>

Each of the multilayer films of Examples 1C to 14C and Comparative Examples 1C and 2C was evaluated using an X-ray diffraction apparatus "NANO Viewer" produced by Rigaku Corporation.

In this regard, an X-ray diffraction pattern derived from a crystal face (200) of the high density polyethylene resin in each of the multilayer films of Examples 1C, 2C, 4C and 5C is shown in each of FIGs. 6(a), 6(b), 7(a) and 7(b).

### <Water vapor barrier property>

The water vapor barrier property of each of the multilayer films of Examples 1C to 14C and Comparative Examples 1C and 2C was evaluated according to a method described in JIS K 7126 (B method; isopiestic method) using "PERMATRAN-W (registered trademark) 3/33" produced by MOCON, Inc.

### <Degree of orientation>

A degree of orientation in a layer in which the existence of the anisotropic crystals was observed was obtained according to the formula of π = (180-H)/180. In this regard, "H" is a half-value width of a peak obtained by converting the X-ray diffraction pattern into a one-dimensional format.

### 2C-2. Evaluation of molded film

The water vapor barrier property of each of the multilayer films of Examples 1C to 14C and Comparative Examples 1C and 2C was evaluated. Hereinbelow, this evaluation method will be described.

### <Water vapor barrier property>

The water vapor barrier property of each of the molded films of Examples 1C to 14C and Comparative Examples 1C and 2C was carried out as follows. First, tablets of zeolite (Φ7.0 mm x 7.0 mm) were put into the respective 10 storage portions of each molded film, and then openings of the storage portions were sealed using a cover film made of aluminium to thereby obtain a packaging body. This packaging body was placed under an atmosphere of 40°C·90%RH for 24 hours, and then was opened to eject the tablets of zeolite. Thereafter, weight change of the tablets of zeolite was measured. By obtaining an amount of water vapor passing through the molded film via the storage portions (a water vapor transmission rate) based on the above measurement result, the water vapor barrier property of each molded film was evaluated.

The above evaluation results of each of Examples 1C to 14C and Comparative Examples 1C and 2C are shown in Table 3.

[Table 3]

**Table 3**

| | Ex. 1C | Ex. 2C | Ex. 3C | Ex. 4C | Ex. 5C | Ex. 6C | Ex. 7C | Ex. 8C | Ex. 9C | Ex. 10C | Ex. 11C | Ex. 12C | Ex. 13C | Ex. 14C | Comp. Ex. 1C | Comp Ex. 2C |
|---|---|---|---|---|---|---|---|---|---|---|---|---|---|---|---|---|
| Total laminated number | 33 | 65 | 129 | 257 | 257 | 1025 | 4097 | 4097 | 4097 | 1025 | 257 | 257 | 257 | 257 | 257 | 257 |
| Crystalline resin "A" | HDPE | HDPE | HDPE | HDPE | HDPE | HDPE | HDPE | HDPE | HDPE | HDPE | HDPE | PCL | PCL | HDPE | PCL | PCL |
| Density: kg/m³ | 953 | 953 | 953 | 953 | 953 | 953 | 953 | 953 | 953 | 953 | 950 | 1020 | 1020 | 953 | 1020 | 1020 |
| Weight average molecular weight | 63000 | 63000 | 63000 | 63000 | 63000 | 63000 | 63000 | 63000 | 63000 | 63000 | 53000 | 84500 | 120000 | 63000 | 84500 | 84500 |
| Thermoplastic resin "B" | PP | PP | PP | PP | PP | PP | PP | PP | PP | PP | PP | PS | PS | NB-E | PS | PS |
| Density: kg/m³ | 910 | 910 | 910 | 910 | 910 | 910 | 910 | 910 | 910 | 910 | 910 | 1060 | 1060 | 1020 | 1060 | 1060 |
| Weight average *molecular weight* | 214000 | 214000 | 214000 | 214000 | 214000 | 214000 | 214000 | 214000 | 214000 | 214000 | 214000 | 210000 | 330000 | 83300 | 210000 | 210000 |
| Total thickness ratio (X:Y) | 1:4 | 1:4 | 1:4 | 1:4 | 1:4 | 1:4 | 1:4 | 3:7 | 1:1 | 1:1 | 1:4 | 1:4 | 1:4 | 1:4 | 7:3 | 4:1 |
| Overall thickness : µm | 80 | 100 | 50 | 100 | 50 | 300 | 300 | 300 | 300 | 300 | 100 | 100 | 100 | 100 | 100 | 100 |
| First layer | | | | | | | | | | | | | | | | |
| Average layer thickness "a": µm | 1 | 0.63 | 0.16 | 0.16 | 0.08 | 0.117 | 0.029 | 0.044 | 0.073 | 0.293 | 0.16 | 0.16 | 0.16 | 0.16 | 0.54 | 0.62 |
| Existence or non-existence of anisotropic crystals | Exist | Exist | Exist | Exist | Exist | Exist | Exist | Exist | Exist | Exist | Exist | Exist | Exist | Exist | Exist | Exist |
| Degree of orientation of anisotropic crystals | 0.76 | 0.77 | 0.81 | 0.91 | 0;92 | 0.93 | 0.94 | 0.94 | 0.97 | 0.91 | 0.89 | 0.9 | 0.91 | 0.83 | 0.79 | 0.83 |
| Second layer | | | | | | | | | | | | | | | | |
| Average layer thickness "b": *µm* | 3.9 | 2.5. | 0.62 | 0.62 | 0.31 | 0.468 | 0.117 | 0.102 | 0.073 | 0.293 | 0.62 | 0.62 | 0.62 | 0.62 | 0.23 | 0.16 |
| Existence or non-existence of anisotropic crystals | Non-exist | Non-exist | Non-exist | Exist | Exist | Exist | Exist | Exist | Exist | Exist | Exist | Non-exist | Non-exist | Non-exist | Non-exist | Non-exist |
| Degree of orientation of anisotropic crystals | - | - | - | 0.79 | 0.81 | 0.83 | 0.83 | 0.88 | 0.89 | 0.9 | 0.78 | - | - | - | - | - |
| Average layer thickness ratio (a/b) | 0.26 | 0.25 | 0.26 | 0.26 | 0.26 | 0.25 | 0.25 | 0.43 | 1.00 | 1.00 | 0.26 | 0.26 | 0.26 | 0.26 | 2.35 | 3.88 |
| Water vapor barrier property | | | | | | | | | | | | | | | | |
| Multilayer film : g/m²·day (per 100 µm thickness) | 1.22 | 1.09 | 1.06 | 0.98 | 0.82 | 0.90 | 0.48 | 0.42 | 0.30 | 0.60 | 1.02 | 7.40 | 6.90 | 0.90 | 10.2 | 8.7 |
| Molded film: mg/day (per 10 storage portions) | 6.10 | 4.36 | 8.48 | 3.92 | 9.84 | 1.80 | 1.68 | 1.55 | 1.50 | 1.10 | 4.08 | 9.87 | 9.20 | 1.28 | 40.8 | 34.8 |

In each of the multilayer films of Examples 1C to 14C, an average layer thickness "a" [nm] of the first layers and an average layer thickness "b" [nm] of the second layers satisfied a relationship of "a≤b". By satisfying such a relationship, as is obvious from Table 3, in at least the first layers thereof, the crystalline resin "A" was formed into anisotropic crystals whose molecular chain axes were oriented in an inclined direction and/or in a horizontal direction with respect to a film plane in a high degree of orientation. Due to this fact, each of the multilayer films of Examples 1C to 14C exhibited an excellent gas barrier property. Further, each of the molded films of Examples 1C to 14C also exhibited the same tendency as each of the multilayer films.

In this regard, as shown in each of FIGs. 6(a) and 6(b), in each of the multilayer films of Examples 1C and 2C, the X-ray diffraction pattern derived from the crystal face (200) of the high density polyethylene resin was observed as a shape having arc-like intensity distribution in a circumferential direction. As shown in each of FIGs. 7 (a) and 7(b), in each of the multilayer films of Examples 4C and 5C, the X-ray diffraction pattern derived from the crystal face (200) of the high density polyethylene resin was observed as a shape having point-like intensity distribution in the circumferential direction.

Further, as shown in FIG. 5, in the multilayer film of Example 6C, the existence of the anisotropic crystals whose molecular chain axes were oriented in the inclined direction with respect to the film plane was observed.

On the other hand, each of the multilayer films of Comparative Examples 1C and 2C did not satisfy the relationship of "a≤b". Due to this fact, in the first layers thereof, anisotropic crystals whose molecular chain axes were oriented in an inclined direction and/or in a horizontal direction with respect to a film plane could be observed, but a degree of orientation of each anisotropic crystal was low. These results indicate that the water vapor barrier property of each of the monolayer films and the molded films of Comparative Examples 1C and 2C is inferior to that of each of the multilayer films and the molded films of Examples 1C to 14C.

### 1D. Manufacture of multilayer film and molded film

### 1D-1. Manufacture of multilayer film

### (Example 1D)

A high density polyethylene resin (HDPE) (produced by Prime Polymer Co., Ltd., "2100J", density: 953 kg/m³, weight average molecular weight: 63,000) as a crystalline resin "A" for forming first layers and a polypropylene resin (PP) (produced by Prime Polymer Co., Ltd., "J106G", density: 910 kg/m³, weight average molecular weight: 214,000) as a thermoplastic resin "B" for forming second layers were prepared, respectively.

A film-like laminated product was formed by melting the above respective high density polyethylene resin and polypropylene resin using extruding machines (produced by SanNT Co., Ltd., "SNT40-28 model number") to bring into melted products each having a temperature of 240°C, and then coextruding them using a feed block and a die. Thereafter, this laminated product was subjected to a heat treatment (an annealing treatment) to be slowly cooled. In this way, a multilayer film in which the first layers and the second layers alternately existed and 1027 layers were laminated together in total was manufactured. Here, extruding amounts of the high density polyethylene resin and the polypropylene resin by the extruding machines were controlled so that a ratio of a total thickness "X" of the first layers to a total thickness "Y" of the second layers became 3:2.

In this regard, a thickness of the multilayer film was 300 µm.

### (Example 2D)

A multilayer film of Example 2D was manufactured using the same facility and conditions as Example 1D except that the extruding amounts of the high density polyethylene resin and the polypropylene resin by the extruding machines were controlled so that the ratio of the total thickness "X" of the first layers to the total thickness "Y" of the second layers became 7:3.

In this regard, a thickness of the multilayer film was 300 µm.

### (Example 3D)

A multilayer film of Example 3D was manufactured using the same facility and conditions as Example 1D except that the extruding amounts of the high density polyethylene resin and the polypropylene resin by the extruding machines were controlled so that the ratio of the total thickness "X" of the first layers to the total thickness "Y" of the second layers became 4:1.

In this regard, a thickness of the multilayer film was 300 µm.

### (Example 4D)

A multilayer film of Example 4D was manufactured using the same facility and conditions as Example 1D except that the extruding amounts of the high density polyethylene resin and the polypropylene resin by the extruding machines were controlled so that the ratio of the total thickness "X" of the first layers to the total thickness "Y" of the second layers became 9:1.

In this regard, a thickness of the multilayer film was 300 µm.

### (Example 5D)

A multilayer film of Example 5D was manufactured using the same facility and conditions as Example 1D except that the extruding amounts of the high density polyethylene resin and the polypropylene resin by the extruding machines were controlled so that the ratio of the total thickness "X" of the first layers to the total thickness "Y" of the second layers became 9.5:0.5.

In this regard, a thickness of the multilayer film was 300 µm.

### (Example 6D)

A multilayer film of Example 6D was manufactured using the same facility and conditions as Example 1D except that the extruding amounts of the high density polyethylene resin and the polypropylene resin by the extruding machines were controlled so that the ratio of the total thickness "X" of the first layers to the total thickness "Y" of the second layers became 1:4.

In this regard, a thickness of the multilayer film was 300 µm.

### (Example 7D)

A multilayer film of Example 7D was manufactured using the same facility and conditions as Example 1D except that the extruding amounts of the high density polyethylene resin and the polypropylene resin by the extruding machines were controlled so that the ratio of the total thickness "X" of the first layers to the total thickness "Y" of the second layers became 3:7.

In this regard, a thickness of the multilayer film was 300 µm.

### (Example 8D)

A multilayer film of Example 8D was manufactured using the same facility and conditions as Example 1D except that the extruding amounts of the high density polyethylene resin and the polypropylene resin by the extruding machines were controlled so that the ratio of the total thickness "X" of the first layers to the total thickness "Y" of the second layers became 2:3.

In this regard, a thickness of the multilayer film was 300 µm.

### 1D-2. Manufacture of molded film

10 storage portions (Φ10.0 mm × 4.5 mm) were formed in each of the multilayer films of Examples 1D to 8D using a blister packer (produced by CKD Corporation, "FBP-300E"). In this regard, the 10 storage portions were formed so as to arrange 2 lines, each including 5 storage portions arranged along a longitudinal direction of the film, along a lateral direction thereof. In this way, molded films of Examples 1D to 8D were manufactured.

### 2D. Evaluation

### 2D-1. Evaluation of multilayer film

A laminated number, existence or non-existence of anisotropic crystals, a crystal structure by X-ray scattering measurement, a water vapor barrier property and a degree of orientation were evaluated on each of the multilayer films of Examples 1D to 8D. Hereinbelow, these evaluation methods will be described.

### <Laminated number, existence or non-existence of anisotropic crystals>

A sample with a cross-sectional surface was formed by cutting each of the multilayer films of Examples 1D to 8D using a microtome, and then a layer structure thereof was obtained by electron microscope observation. Namely, the cross-sectional surface of the sample was observed at a magnification of 1,000 to 100,000 times using "JSM-7500FA" produced by JEOL Ltd., a picture of the cross-sectional surface was recorded, and then the layer structure (existence or non-existence of anisotropic crystals oriented in a inclined direction and/or a horizontal direction in the first layers and the second layers) and the laminated number were measured.

### <Crystal structure by X-ray scattering measurement>

Each of the multilayer films of Examples 1D to 8D was evaluated using an X-ray diffraction apparatus "NANO Viewer" produced by Rigaku Corporation.

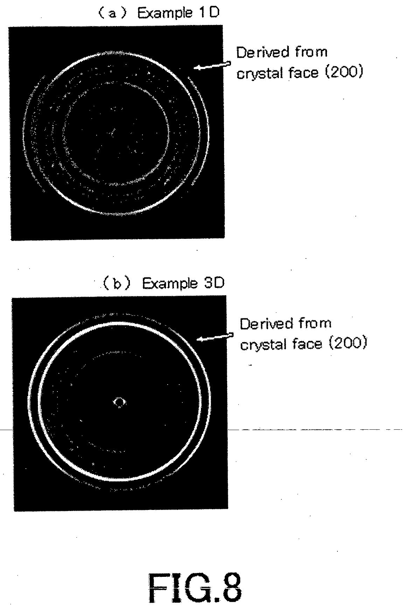

In this regard, an X-ray diffraction pattern derived from a crystal face (200) of the high density polyethylene resin in each of the multilayer films of Examples 1D and 3D is shown in each of FIGs. 8(a) and 8(b).

### <Water vapor barrier property>

The water vapor barrier property of each of the multilayer films of Examples 1D to 8D was evaluated according to a method described in JIS K 7126 (B method; isopiestic method) using "PERMATRAN-W (registered trademark) 3/33" produced by MOCON, Inc.

### <Degree of orientation>

A degree of orientation in a layer in which the existence of the anisotropic crystals was observed was obtained according to the formula of π = (180-H)/180. In this regard, "H" is a half-value width of a peak obtained by converting the X-ray diffraction pattern into a one-dimensional format.

### 2D-2. Evaluation of molded film

The water vapor barrier property of each of the multilayer films of Examples 1D to 8D was evaluated. Hereinbelow, this evaluation method will be described.

### <Water vapor barrier property>

The water vapor barrier property of each of the molded films of Examples 1D to 8D was carried out as follows. First, tablets of zeolite (Φ7.0 mm × 7.0 mm) were put into the respective 10 storage portions of each molded film, and then openings of the storage portions were sealed using a cover film made of aluminium to thereby obtain a packaging body. This packaging body was placed under an atmosphere of 40°C·90%RH for 24 hours, and then was opened to eject the tablets of zeolite. Thereafter, weight change of the tablets of zeolite was measured. By obtaining an amount of water vapor passing through the molded film via the storage portions (a water vapor transmission rate) based on the above measurement result, the water vapor barrier property of each molded film was evaluated.

The above evaluation results of each of Examples 1D to 8D are shown in Table 4.

[Table 4]

**Table 4**

| | Ex. 1D | Ex. 2D | Ex. 3D | Ex. 4D | Ex. 5D | Ex. 6D | Ex. 7D | Ex. 8D |
|---|---|---|---|---|---|---|---|---|
| Total laminated number | 1027 | 1027 | 1027 | 1027 | 1027 | 1027 | 1027 | 1027 |
| Crystalline resin "A" | HDPE | HDPE | HDPE | HDPE | HDPE | HDPE | HDPE | HDPE |
| Density: kg/m³ | 953 | 953 | 953 | 953 | 953 | 953 | 953 | 953 |
| Weight average molecular weight | 63000 | 63000 | 63000 | 63000 | 63000 | 63000 | 63000 | 63000 |
| Thermoplastic resin "B" | PP | PP | PP | PP | PP | PP | PP | PP |
| Density kg/m³ | 910 | 910 | 910 | 910 | 910 | 910 | 910 | 910 |
| Weight average molecular weight | 21400 | 21400 | 21400 | 21400 | 21400 | 21400 | 21400 | 21400 |
| Total thickness ratio (X:Y) | 3:2 | 7:3 | 4:1 | 9:1 | 9.5:0.5 | 1:4 | 3:7 | 2:3 |
| Overall thickness: µm | 300 | 300 | 300 | 300 | 300 | 300 | 300 | 300 |
| First layer | | | | | | | | |
| Average layer thickness "a": µm | 0.292 | 0.341 | 0.39 | 0.439 | 0.463 | 0.098 | 0.146 | 0.195 |
| Existence or non-existence of anisotropic crystals | Exist | Exist | Exist | Exist | Exist | Exist | Exist | Exist |
| Degree of orientation of anisotropic crystals | 0.85 | 0.84 | 0.82 | 0.79 | 0.77 | 0.94 | 0.93 | 0.91 |
| Second layer | | | | | | | | |
| Average layer thickness "b": µm | 0.195 | 0.146 | 0.098 | 0.049 | 0.024 | 0.390 | 0.341 | 0.292 |
| Existence or non-existence of anisotropic crystals | Exist | Exist | Exist | Exist | Exist | Exist | Exist | Exist |
| Degree of orientation of anisotropic crystals | 0.81 | 0.84 | 0.85 | 0.85 | 0.85 | 0.73 | 0.75 | 0.78 |
| Average layer thickness ratio (a/b) | 1.5 | 2.3 | 4.0 | 9.0 | 19.3 | 0.3 | 0.4 | 0.7 |
| Water vapor barrier property | | | | | | | | |
| Multilayer film : g/m²·day (per 100 µm thickness) | 0.75 | 0.72 | 0.75 | 0.72 | 0.78 | 0.6 | 0.66 | 0.69 |
| Molded film : mg/day (per 10 storage portions) | 1.03 | 1.05 | 1.35 | 1.58 | 1.63 | 2.34 | 1.86 | 1.73 |

As is obvious from Table 4, each of the multilayer films and the molded films of Examples 1D to 8D had a sufficient gas barrier property. In this regard, In each of the multilayer films of Examples 1D to 5D, an average layer thickness "a" [nm] of the first layers and an average layer thickness "b" [nm] of the second layers satisfied a relationship of "a>b". By satisfying such a relationship, the water vapor transmission rate thereof fell within the range of 0.72 to 0.78 g/m²·day (40°C·90%RH) per 100 µm thickness. Further, the water vapor transmission rate of each molded film (each multilayer film in which the storage portions were formed) fell within the range of 1.03 to 1.63 mg/day (40°C·90%RH) per 10 storage portions.

On the other hand, each of the multilayer films of Examples 6D to 8D did not satisfy the relationship of "a>b", but had an excellent water vapor barrier property falling within the range of 0.6 to 0.69 g/m²·day (40°C·90%RH) per 100 µm thickness which was superior to that of each of the multilayer films of Examples 1D to 5D. However, each of the molded films of Examples 6D to 8D fell within the range of 1.73 to 2.34 mg/day (40°C-90%RH) per 10 storage portions being a value lower than that of each of the molded films of Examples 1D to 5D.

This is considered to be caused by the following reasons. Namely, in each of the molded films of Examples 1D to 5D, each first layer could maintain a sufficient thickness for exhibiting the gas barrier property without being fractured at curved portions which were generated by forming the storage portions. On the other hand, in each of the molded films of Examples 6D to 8D, each first layer was partially fractured or could not maintain the sufficient thickness for exhibiting the gas barrier property.

### INDUSTRIAL APPLICABILITY

A multilayer film of the present invention has a plurality of unit layers laminated together, and each unit layer includes a first layer containing a crystalline resin "A" with thermoplasticity, and a second layer containing a thermoplastic resin "B" different from the crystalline resin "A". In the case where such a multilayer film is deformed in a thickness direction thereof to from a plurality of concave portions each having a size of inner diameter Φ10.0 mm × height 4.5 mm therein, a gas transmission rate of the multilayer film via the concave portions is 10.0 mg/day (40°C·90%RH) per 10 concave portions or less. This makes it possible to provide a multilayer film having both a gas barrier property and moldability without being subjected to a stretching process. Therefore, the present invention has industrial applicability.

## Claims

1. A multilayer film in which a plurality of unit layers are laminated together, each unit layer comprising:
a first layer containing a crystalline resin "A" with thermoplasticity; and
a second layer containing a thermoplastic resin "B" different from the crystalline resin "A",
wherein in the case where the multilayer film is deformed in a thickness direction thereof to from a plurality of concave portions each having a size of inner diameter Φ10.0 mm x height 4.5 mm therein, a gas transmission rate of the multilayer film via the concave portions is 10.0 mg/day (40°C·90%RH) per 10 concave portions or less.

2. The multilayer film as claimed in claim 1, wherein the first layers and the second layers alternately and repeatedly exist along the thickness direction of the multilayer film.

3. The multilayer film as claimed in claim 1 or 2, wherein in each first layer, the crystalline resin "A" is formed into at least one type of anisotropic crystals whose molecular chain axes are oriented in an inclined direction with respect to a main surface of the multilayer film and anisotropic crystals whose molecular chain axes are oriented in a horizontal direction with respect to the main surface of the multilayer film.

4. The multilayer film as claimed in claim 3, wherein in each first layer, a degree of orientation of each anisotropic crystal of the crystalline resin "A" is 0.80 or more but less than 1.00.

5. The multilayer film as claimed in any one of claims 1 to 4, wherein an average layer thickness of the first layers is in the range of 10 to 1,000 nm.

6. The multilayer film as claimed in any one of claims 1 to 5, wherein a weight average molecular weight of the crystalline resin "A" is in the range of 40,000 to 200,000.

7. The multilayer film as claimed in any one of claims 1 to 6, wherein an X-ray diffraction pattern derived from crystals of the crystalline resin "A" is observed on the multilayer film as at least one of a shape having point-like intensity distribution in a circumferential direction "Φ" and a shape having arc-like intensity distribution in the circumferential direction "Φ".

8. The multilayer film as claimed in any one of claims 1 to 7, wherein in each second layer, the thermoplastic resin "B" has crystallinity.

9. The multilayer film as claimed in claim 8, wherein in each second layer, the thermoplastic resin "B" is formed into at least one type of anisotropic crystals whose molecular chain axes are oriented in an inclined direction with respect to a main surface of the multilayer film and anisotropic crystals whose molecular chain axes are oriented in a horizontal direction with respect to the main surface of the multilayer film.

10. The multilayer film as claimed in claim 9, wherein in each second layer, a degree of orientation of each anisotropic crystal of the thermoplastic resin "B" is 0.80 or more but less than 1.00.

11. The multilayer film as claimed in any one of claims 8 to 10, wherein an X-ray diffraction pattern derived from crystals of the thermoplastic resin "B" is observed on the multilayer film as at least one of a shape having point-like intensity distribution in a circumferential direction "Φ" and a shape having arc-like intensity distribution in the circumferential direction "Φ".

12. The multilayer film as claimed in any one of claims 8 to 11, wherein an average layer thickness of the second layers is in the range of 10 to 1,000 nm.

13. The multilayer film as claimed in any one of claims 8 to 11, wherein in the case where an average layer thickness of the first layers is defined as "a" [nm] and an average layer thickness of the second layers is defined as "b" [nm], "a" and "b" satisfy a relationship of "a≤b".

14. The multilayer film as claimed in claim 13, wherein "a/b" is in the range of 0.10 to 1.00.

15. The multilayer film as claimed in claim 13 or 14, wherein the average layer thickness of the second layers is in the range of 50 to 2,000 nm.

16. The multilayer film as claimed in any one of claims 8 to 11, wherein in the case where an average layer thickness of the first layers is defined as "a" [nm] and an average layer thickness of the second layers is defined as "b" [nm], "a" and "b" satisfy a relationship of "a>b".

17. The multilayer film as claimed in claim 16, wherein "a/b" is more than 1.00 but 9.00 or less.

18. The multilayer film as claimed in claim 16 or 17, wherein the average layer thickness of the second layers is in the range of 5 to 900 nm.

19. The multilayer film as claimed in any one of claims 8 to 18, wherein a weight average molecular weight of the thermoplastic resin "B" is in the range of 100,000 to 400,000.

20. A molded film being obtained by subjecting the multilayer film defined by any one of claims 1 to 19 to secondary molding so that the multilayer film is deformed in the thickness direction thereof to from the plurality of concave portions therein.

21. A packaging body comprising the multilayer film defined by any one of claims 1 to 19, or the molded film defined by claim 20.
